(19) Europäisches Patentamt / European Patent Office / Office européen des brevets

(11) **EP 4 239 540 B1**

(12) **EUROPEAN PATENT SPECIFICATION**

(45) Date of publication and mention
of the grant of the patent:
**06.08.2025  Bulletin 2025/32**

(21) Application number: **22896833.5**

(22) Date of filing: **13.12.2022**

(51) International Patent Classification (IPC):
**G01C 21/20** *(2006.01)*     **G06Q 10/02** *(2012.01)*
**G06Q 10/1093** *(2023.01)*     **G06Q 50/14** *(2012.01)*

(52) Cooperative Patent Classification (CPC):
**G06Q 10/02; G01C 21/20; G06Q 10/025;**
**G06Q 10/1093;** G06F 9/451; G06Q 50/14

(86) International application number:
**PCT/CN2022/138811**

(87) International publication number:
**WO 2023/130923 (13.07.2023 Gazette 2023/28)**

(54) **TRAVEL PROMPTING METHOD AND APPARATUS**

AUSLÖSUNGSAUFFORDERUNGSVERFAHREN UND -VORRICHTUNG

PROCÉDÉ ET APPAREIL D'INVITE DE DÉPLACEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.01.2022  CN 202210023799**

(43) Date of publication of application:
**06.09.2023  Bulletin 2023/36**

(73) Proprietor: **Honor Device Co., Ltd.**
**Shenzhen, Guangdong 518040 (CN)**

(72) Inventor: **ZOU, Jun**
**Shenzhen, Guangdong 518040 (CN)**

(74) Representative: **Beder, Jens**
**Mitscherlich PartmbB**
**Patent- und Rechtsanwälte**
**Karlstraße 7**
**80333 München (DE)**

(56) References cited:
AU-A1- 2013 242 968     CN-A- 107 145 557
CN-A- 108 830 543     CN-A- 109 708 657
US-A1- 2016 117 618     US-A1- 2017 108 339

## Description

This application claims priority to Chinese Patent Application CN 116 468 134 A (Application No. 202210023799.0), filed with the China National Intellectual Property Administration on January 10, 2022 and entitled "TRIP PROMPTING METHOD AND APPARATUS".

## TECHNICAL FIELD

This application relates to the field of terminal technologies, and in particular, to a trip prompting method, an electronic device and a computer-readable storage medium.

## BACKGROUND

With the increasing development of terminal technologies, a terminal device may recommend a trip service to a user according to the user's trip. For example, the terminal device may recommend a flight travel service based on flight reservation information.

In a possible situation, a departure reminding service may be included in the trip service, so that the user can determine a departure time based on the departure reminding service.

However, when the departure time is inaccurate, the user may depart too early or too late.

AU 2013 242 968 A1 discloses a method that communicates a hurry status indication to a traveler to enable that traveler to determine when he or she should commence a trip.

US 2017/108339 A1 discloses a mobile device providing time regulated navigational guidance for travel to a flight gate in an airport terminal, based on the time for boarding the flight, the preferences of the traveler, estimated transit times on various segments of a route to the gate from a starting point of the travel (or the current location of the mobile device) involving different transportation modalities, and wait times at various queues in the airport. Notifications and/or reminders are provided according to the time estimates to guide the travel for timely travel to the gate and optionally recommend points of interests on the way to the gate within the time constraint.

## SUMMARY

To solve the problem of improving accuracy of a terminal device reminding a user to depart, so that the user may not depart too early or too late, embodiments of this application provide a trip prompting method, an electronic device and a computer-readable storage medium according to the enclosed independent claims. Advantageous features of the present invention are defined in the corresponding subclaims. In the following, parts of the description and drawings referring to embodiments, which are not covered by the claims, are not presented as embodiments of the invention but as examples useful for understanding the invention.

According to a first aspect, an embodiment of this application provides a trip prompting method, applied to a first terminal, the method including: acquiring, by the first terminal, trip information, the trip information including a trip start time, a trip start position, and a trip start date; acquiring, by the first terminal, a first duration associated with the trip start position; acquiring, by the first terminal at a first time, a second duration required to arrive at the trip start position from a position of the first terminal; calculating, by the first terminal, a first difference between a departure time and a second time, the second time being a time after the first time passes the second duration; the departure time being the trip start time on the trip start date; and displaying, by the first terminal, a first interface when the first difference is less than or equal to the first duration, the first interface including information for prompting departure. Since the first duration is learned in advance, when a first user departs from the first time, it may not be too early or too late, so as to improve accuracy of the first terminal reminding the user to depart.

In a possible implementation, a difference between the first time and the departure time is less than a preset value, and the method further includes: when the first difference is greater than the first duration, redetermining, by the first terminal at a third time, whether the information for prompting departure is displayed on the first interface; the third time being later than the first time. In this way, the first terminal re-performs the determining step at the third time, so as to determine whether it is appropriate for the user to depart at the third time.

In a possible implementation, the third time satisfies the following formula: the third time=the first time+(the first difference-the first duration)/2.

In a possible implementation, the acquiring, by the first terminal, a first duration associated with the trip start position includes: acquiring, by the first terminal, corresponding stay durations of a plurality of terminals at the trip start position from a service platform; where the service platform is configured to serve the first terminal; clustering, by the first terminal, the corresponding stay durations of the plurality of terminals at the trip start position to obtain a plurality of first curves; fitting, by the first terminal, the plurality of first curves into a second curve; calculating, by the first terminal, area ratios of the plurality of first curve to the second curve respectively; and determining, by the first terminal, a duration corresponding to one of the plurality of first curves as the first duration when the area ratio of the one of the plurality of first curves to the second curve is maximum. Since the first duration is in line with a habit of durations during which a plurality of users stay at the trip start position, when the first terminal performs the determining step based on the first duration, accuracy of the first terminal reminding the user to depart can be improved, so that the user may not depart too early or too late.

In a possible implementation, the acquiring, by the first terminal, a first duration associated with the trip start position includes: acquiring, by the first terminal, corresponding stay durations of a plurality of terminals at the trip start position from a service platform; where the service platform is configured to serve the first terminal; clustering, by the first terminal, the corresponding stay durations of the plurality of terminals at the trip start position to obtain a plurality of third durations; acquiring, by the first terminal, a plurality of historical durations that the first terminal historically stays at the trip start position; obtaining, by the first terminal, an average duration of the plurality of historical durations; and determining, by the first terminal, one of the plurality of third durations as the first duration when an absolute value of a difference between the average duration and the one of the plurality of third durations is less than or equal to a first threshold. Since the first duration is in line with a habit of durations during which a plurality of users stay at the trip start position and a habit of a duration during which the first user stays at the trip start position, when the first terminal performs the determining step based on the first duration, accuracy of reminding the user to depart can be improved, so that the user may not depart too early or too late.

In a possible implementation, the first duration is further associated with one or more of a type corresponding to the trip start position, a type corresponding to the trip start time, and a trip ticket type corresponding to the trip information, and the acquiring, by the first terminal, corresponding stay durations of a plurality of terminals at the trip start position from a service platform includes: querying, by the first terminal, the service platform for information corresponding to the type corresponding to the trip start position, the type corresponding to the trip start time, and/or the trip ticket type corresponding to the trip information to obtain the corresponding stay durations of the plurality of terminals at the trip start position. In this way, accuracy of the first terminal obtaining the first duration can be improved, thereby improving the accuracy of the first terminal reminding the user to depart.

In a possible implementation, when the trip information is flight information, the type corresponding to the trip start position includes a large airport or a small airport, the type corresponding to the trip start time includes a morning flight, an afternoon flight, or an evening flight, and the trip ticket type corresponding to the trip information includes a domestic flight or an international flight.

In a possible implementation, the acquiring, by the first terminal, a first duration associated with the trip start position includes: acquiring, by the first terminal, the first duration from a service platform; the service platform being configured to serve the first terminal, and the first duration being calculated by the service platform according to corresponding stay durations of a plurality of terminals at the trip start position. In this manner, power of the first terminal and memory resources of the first terminal can be saved compared with the manner in which the first terminal calculates the first duration.

In a possible implementation, the acquiring, by the first terminal at a first time, a second duration required to arrive at the trip start position from a position of the first terminal includes: acquiring, by the first terminal, a fourth duration and a fifth duration from a taxi-hailing application at the first time; where the fourth duration is a taxi-hailing waiting duration, and the fifth duration is a distance duration required by the first terminal from the position of the first terminal to the trip start position at the first time; and calculating, by the first terminal, a sum of the fourth duration and the fifth duration to obtain the second duration. In this way, the first terminal can calculate a second time after obtaining the second duration.

In a possible implementation, the method further includes: sending, by the first terminal, prompt information to a second terminal for the second terminal to prompt, according to the prompt information, the user to depart. In this way, flexibility of reminding of departure prompt information can be improved, which enhances user experience and prevents missing of the departure prompt information by the user.

According to a second aspect, an embodiment of this application provides a trip prompting method, applied to a first terminal, the method including: acquiring, by the first terminal, flight information; where the flight information includes a trip start position, a trip identifier, a trip start time, and a trip start date; acquiring, by the first terminal at a first time, a first duration required to arrive at the trip start position from a position of the first terminal; acquiring, by the first terminal, a second time; the second time being associated with a check-in state, the check-in state being acquired by the first terminal at the first time from a booking application based on the trip identifier, the trip start time, and the trip start date; calculating, by the first terminal, a second difference between the second time and a third time; the third time being a time after the first time passes the first duration, the second time being later than the third time; and displaying, by the first terminal, a first interface when the second difference is less than or equal to a second threshold, the first interface including information for prompting departure. In this way, the first terminal can determine, based on the check-in state of the flight information, whether to display the first interface, so as to improve accuracy of the first terminal reminding the user to depart.

In a possible implementation, a difference between the first time and the trip start time on the trip start date is less than a preset value, and the method further includes: when the second difference is greater than the second threshold, redetermining, by the first terminal at a fourth time, whether the information for prompting departure is displayed on the first interface; the fourth time being later than the first time. In this way, the first terminal re-performs the determining step at the fourth time, so as to determine whether it is appropriate for the user to depart at the fourth time.

In a possible implementation, the fourth time satisfies the following formula: the fourth time=the first time+(the second difference-the second threshold)/2.

In a possible implementation, the acquiring, by the first terminal, a second time includes: determining, by the first terminal when the check-in state is Not check in, a check-in closing time acquired from the booking application as the second time.

In a possible implementation, the acquiring, by the first terminal, a second time includes: determining, by the first terminal when the check-in state is Have checked in, a gate closing time acquired from the booking application as the second time; the gate closing time being a time after the departure time minus a first value, and the departure time being the trip start time on the trip start date.

In a possible implementation, the acquiring, by the first terminal at a first time, a first duration required to arrive at the trip start position from a position of the first terminal includes: acquiring, by the first terminal, a second duration and a third duration from a taxi-hailing application at the first time; the second duration being a taxi-hailing waiting duration, and the third duration being a distance duration required by the first terminal from the position of the first terminal to the trip start position at the first time; and calculating, by the first terminal, a sum of the second duration and the third duration to obtain the first duration. In this way, the first terminal can calculate the third time after obtaining the first duration.

In a possible implementation, the method further includes: sending, by the first terminal, prompt information to a second terminal for the second terminal to prompt, according to the prompt information, the user to depart. In this way, flexibility of reminding of departure prompt information can be improved, which enhances user experience and prevents missing of the departure prompt information by the user.

According to a third aspect, an embodiment of this application provides a trip prompting apparatus. The trip prompting apparatus may be a first terminal, or a chip or system-on-chip in the first terminal. The trip prompting apparatus may include a processing unit and a display unit. When the trip prompting apparatus is the first terminal, the processing unit may be a processor, and the display unit may be a display screen. The trip prompting apparatus may also include a storage unit. The storage unit may be a memory. The storage unit is configured to store instructions, and the processing unit executes the instructions stored in the storage unit, so that the first terminal implements the method described in any one of the first aspect or the possible implementations of the first aspect. When the trip prompting apparatus is the chip or system-on-chip in the first terminal, the processing unit may be a processor, the display unit may be a display screen, and the processing unit executes the instructions stored in the storage unit, so that the first terminal implements the method described in any one of the first aspect or the possible implementations of the first aspect. The storage unit may be a storage unit (such as a register or a cache) in the chip, or may be a storage unit (such as a read-only memory or a random access memory) located outside the chip in the first terminal.

Exemplarily, the processing unit is configured to acquire trip information, the trip information including a trip start time, a trip start position, and a trip start date; the processing unit is further configured to acquire a first duration associated with the trip start position; the processing unit is further configured to acquire, at a first time, a second duration required to arrive at the trip start position from a position of the first terminal; the processing unit is further configured to calculate a first difference between a departure time and a second time, the second time being a time after the first time passes the second duration; the departure time being the trip start time on the trip start date; and the display unit is configured to display a first interface when the first difference is less than or equal to the first duration, the first interface including information for prompting departure.

In a possible implementation, a difference between the first time and the departure time is less than a preset value, and the processing unit is further configured to: when the first difference is greater than the first duration, redetermine, at a third time, whether the information for prompting departure is displayed on the first interface; the third time being later than the first time.

In a possible implementation, the third time satisfies the following formula: the third time=the first time+(the first difference-the first duration)/2.

In a possible implementation, the processing unit is specifically configured to: acquire corresponding stay durations of a plurality of terminals at the trip start position from a service platform; where the service platform is configured to serve the first terminal; cluster the corresponding stay durations of the plurality of terminals at the trip start position to obtain a plurality of first curves; fit the plurality of first curves into a second curve; calculate area ratios of the plurality of first curve to the second curve respectively; and determine a duration corresponding to one of the plurality of first curves as the first duration when the area ratio of the one of the plurality of first curves to the second curve is maximum.

In a possible implementation, the processing unit is specifically configured to: acquire corresponding stay durations of a plurality of terminals at the trip start position from a service platform; where the service platform is configured to serve the first terminal; cluster the corresponding stay durations of the plurality of terminals at the trip start position to obtain a plurality of third durations; acquire a plurality of historical durations that the first terminal historically stays at the trip start position; obtain an average duration of the plurality of historical durations; and determine one of the plurality of third durations as the first duration when an absolute value of a difference between the average duration and the one of the plurality of third durations is less than or equal to a first threshold.

In a possible implementation, the first duration is further associated with one or more of a type corresponding to the trip start position, a type corresponding to the trip start time, and a trip ticket type corresponding to the trip information, and the processing unit is specifically configured to: query the service platform for information corresponding to the type corresponding to the trip start position, the type corresponding to the trip start time, and/or the trip ticket type corresponding to the trip information to obtain the corresponding stay durations of the plurality of terminals at the trip start position.

In a possible implementation, when the trip information is flight information, the type corresponding to the trip start position includes a large airport or a small airport, the type corresponding to the trip start time includes a morning flight, an afternoon flight, or an evening flight, and the trip ticket type corresponding to the trip information includes a domestic flight or an international flight.

In a possible implementation, the processing unit is specifically configured to: acquire the first duration from a service platform; the service platform being configured to serve the first terminal, and the first duration being calculated by the service platform according to corresponding stay durations of a plurality of terminals at the trip start position.

In a possible implementation, the processing unit is specifically configured to: acquire a fourth duration and a fifth duration from a taxi-hailing application at the first time; where the fourth duration is a taxi-hailing waiting duration, and the fifth duration is a distance duration required by the first terminal from the position of the first terminal to the trip start position at the first time; and calculate a sum of the fourth duration and the fifth duration to obtain the second duration.

In a possible implementation, the apparatus further includes a communication unit, the communication unit being configured to: send prompt information to a second terminal for the second terminal to prompt, according to the prompt information, the user to depart.

According to a fourth aspect, an embodiment of this application provides a trip prompting apparatus. The trip prompting apparatus may be a first terminal, or a chip or system-on-chip in the first terminal. The trip prompting apparatus may include a processing unit and a display unit. When the trip prompting apparatus is the first terminal, the processing unit may be a processor, and the display unit may be a display screen. The trip prompting apparatus may also include a storage unit. The storage unit may be a memory. The storage unit is configured to store instructions, and the processing unit executes the instructions stored in the storage unit, so that the first terminal implements the method described in any one of the second aspect or the possible implementations of the second aspect. When the trip prompting apparatus is the chip or system-on-chip in the first terminal, the processing unit may be a processor, the display unit may be a display screen, and the processing unit executes the instructions stored in the storage unit, so that the first terminal implements the method described in any one of the second aspect or the possible implementations of the second aspect. The storage unit may be a storage unit (such as a register or a cache) in the chip, or may be a storage unit (such as a read-only memory or a random access memory) located outside the chip in the first terminal.

Exemplarily, the processing unit is configured to acquire flight information; where the flight information includes a trip start position, a trip identifier, a trip start time, and a trip start date; the processing unit is further configured to acquire, at a first time, a first duration required to arrive at the trip start position from a position of the first terminal; the processing unit is further configured to acquire second time; the second time being associated with a check-in state, the check-in state being acquired by the first terminal at the first time from a booking application based on the trip identifier, the trip start time, and the trip start date; the processing unit is further configured to calculate a second difference between the second time and a third time; the third time being a time after the first time passes the first duration, the second time being later than the third time; and the display unit is configured to display a first interface when the second difference is less than or equal to a second threshold, the first interface including information for prompting departure.

In a possible implementation, a difference between the first time and the trip start time on the trip start date is less than a preset value, and the processing unit is further configured to: when the second difference is greater than the second threshold, redetermine, at a fourth time, whether the information for prompting departure is displayed on the first interface; the fourth time being later than the first time.

In a possible implementation, the fourth time satisfies the following formula: the fourth time=the first time+(the second difference-the second threshold)/2.

In a possible implementation, the processing unit is specifically configured to: determine, when the check-in state is Not check in, a check-in closing time acquired from the booking application as the second time.

In a possible implementation, the processing unit is specifically configured to: determine, when the check-in state is Have checked in, a gate closing time acquired from the booking application as the second time; the gate closing time being a time after the departure time minus a first value, and the departure time being the trip start time on the trip start date.

In a possible implementation, the processing unit is specifically configured to: acquire a second duration and a third duration from a taxi-hailing application at the first time; the second duration being a taxi-hailing waiting duration, and the third duration being a distance duration required by the first terminal from the position of the first terminal to the trip start position at the first time; and calculate a sum of the second duration and the third duration to obtain the first duration.

In a possible implementation, the apparatus further includes a communication unit, the communication unit being configured to: send prompt information to a second terminal for the second terminal to prompt, according to the prompt information, the user to depart.

According to a fifth aspect, an embodiment of this application provides an electronic device, including a processor and a memory, the memory being configured to store code instructions; and the processor being configured to run the code instructions to perform the method described in any one of possible implementations of the first aspect to the second aspect.

According to a sixth aspect, an embodiment of this application provides a trip prompting system, the system including the apparatuses described in various possible implementations of the third aspect to the fourth aspect.

According to a seventh aspect, an embodiment of this application provides a computer-readable storage medium. The computer-readable storage medium stores a computer program or instruction. The computer program or instruction, when run on a computer, causes the computer to perform the method described in any one of possible implementations of the first aspect to the second aspect.

According to an eighth aspect, an embodiment of this application provides a computer program product including a computer program. The computer program, when run on a computer, causes the computer to perform the method described in any one of possible implementations of the first aspect to the second aspect.

According to a ninth aspect, this application provides a chip or system-on-chip. The chip or system-on-chip includes at least one processor and a communication interface. The communication interface and the at least one processor are interconnected through a wire. The at least one processor is configured to run a computer program or instruction to perform the method described in any one of possible implementations of the first aspect to the second aspect. The communication interface in the chip may be an input/output interface, a pin, a circuit, or the like.

In a possible implementation, the chip or system-on-chip described above in this application further includes at least one memory. The at least one memory stores instructions. The memory may be a storage unit in the chip, such as a register or a cache, or may be a storage unit (such as a read-only memory or a random access memory) of the chip.

It should be understood that the second aspect to the ninth aspect of this application correspond to the technical solution of the first aspect of this application, and the beneficial effects achieved by each aspect and the corresponding feasible implementations are similar. Details are not described again.

## BRIEF DESCRIPTION OF DRAWINGS

FIG. 1 is a schematic diagram of a hardware structure of a first terminal according to an embodiment of this application;

FIG. 2 is a schematic diagram of a software structure of a first terminal according to an embodiment of this application;

FIG. 3 is a schematic flowchart of a trip prompting method according to an embodiment of this application;

FIG. 4A and FIG. 4B are schematic diagrams of a flight travel scenario associated event graph according to an embodiment of this application;

FIG. 5 is a schematic diagram of an interface of a first terminal displaying a trip service according to an embodiment of this application;

FIG. 6 is a schematic diagram of an interface of a watch displaying a trip service according to an embodiment of this application;

FIG. 7A and FIG. 7B are schematic flowcharts of a trip prompting method according to an embodiment of this application;

FIG. 8 is a schematic diagram of distribution curves of waiting durations according to an embodiment of this application;

FIG. 9 is a schematic diagram of a first terminal displaying a first interface according to an embodiment of this application;

FIG. 10 is a schematic flowchart of a trip prompting method according to an embodiment of this application;

FIG. 11 is a schematic flowchart of a trip prompting method according to an embodiment of this application;

FIG. 12 is a schematic flowchart of a trip prompting method according to an embodiment of this application;

FIG. 13 is a schematic structural diagram of a trip prompting apparatus according to an embodiment of this application;

FIG. 14 is a schematic structural diagram of a trip prompting apparatus according to an embodiment of this application; and

FIG. 15 is a structural schematic diagram of a chip according to an embodiment of this application.

## DESCRIPTION OF EMBODIMENTS

For ease of describing the technical solutions in the embodiments of this application clearly, in the embodiments of this application, words such as "first" and "second" are used to distinguish same or similar items with a basically same function and role. For example, a first chip and a second chip are merely used to distinguish different chips, and are not intended to limit a sequence thereof. A person skilled in the art may understand that the words such as "first" and "second" do not limit a quantity and an execution order, and the words such as "first" and "second" do not indicate a definite difference.

It should be noted that in the embodiments of this application, the terms such as "exemplarily" and "for example" are used to represent giving an example, an illustration or a description. Any embodiment or design scheme described as "exemplary" or "for example" in this application should not be explained as being more preferred or having more advantages than another embodiment or design scheme. Exactly, the terms such as "exemplary" and "example" as used are intended to present a related concept in a specific manner.

In the embodiments of this application, "at least one" refers to one or more, and "a plurality of" refers to two or more. The term "and/or" describes an association relationship for describing associated objects and represents that three relationships may exist. For example, A and/or B may represent: only A exists, both A and B exist, and only B exists, where A and B may be singular or plural. The character "/" in this specification generally indicates an "or" relationship between the associated objects. "At least one of the following items" or a similar expression means any combination of these items, including a single item or any combination of a plurality of items. For example, at least one of a, b, or c may represent: a, b, c, a-b, a-c, b-c, or a-b-c, where a, b, and c may be singular or plural.

With the increasing development of terminal technologies, a terminal device may recommend a travel service to a user according to the user's trip. For example, the terminal device may recommend a flight travel service based on flight reservation information.

It may be understood that the terminal device may obtain flight data by sharing the flight data with a three-party application. However, the user needs to actively add information corresponding to the flight data to a calendar, so as to acquire a related flight travel and then recommend services to the user.

It may be understood that, during the user's journey, reasons that affect the user's travel may include a plurality of situations. For example, taking a flight travel as an example, in a travel preparation scenario, the user may forget a check-in time, or the user cannot find a suitable seat, or the user does not pay attention to weather conditions at a destination, resulting in less clothes, or the user forgets to set a departure reminding alarm clock and cannot determine a departure time, or the user does not know a specific security check time and cannot determine departure, or, during peak hours, the user queues for a taxi for a long time, or the user does not know a flight delay duration, or a long queuing time for security check leads to a tight boarding time, or when a flight arrives at the destination, it is cumbersome to search a baggage carousel. Such situations may all affect the user's travel.

In view of this, embodiments of this application provide a trip prompting method and apparatus. Based on a successive event relationship of a trip travel, a first terminal may acquire, through a booking application, a state in which a first user handles a trip service, i.e., a trip state. In combination with a state of the first user corresponding to a position of the first terminal, by constructing a related service recommendation matrix, an intention of the first user at each travel event node is quickly and accurately predicted, and a trip associated service is recommended in a timely and proactive manner. Then, according to degrees of urgency and importance of the recommended service, the user's attention, and a device state, the user is reminded in time with the most appropriate device and manner. In this way, trip prompting for the first user can be realized based on the recommended service.

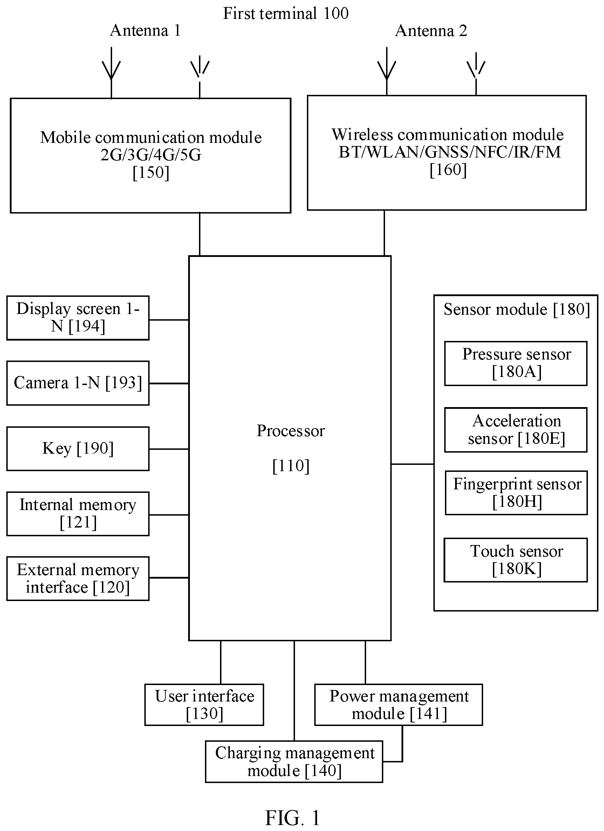

The method according to this embodiment of this application is applicable to a first terminal. The first terminal may include a mobile phone, a watch, or the like. Exemplarily, FIG. 1 is a schematic diagram of a hardware structure of a first terminal according to an embodiment of this application. As shown in FIG. 1, a first terminal 100 may include a processor 110, an external memory interface 120, an internal memory 121, a power management module 141, an antenna 1, an antenna 2, a mobile communication module 150, a wireless communication module 160, a sensor module 180, a key 190, a camera 193, a display screen 194, a user interface 130, a charging management module 140, and the like. The sensor module 180 may include: a pressure sensor 180A, an acceleration sensor 180E, a fingerprint sensor 180H, a touch sensor 180K, and the like.

It should be noted that the structure shown in this embodiment of this application does not constitute a specific limitation on the first terminal 100. It may be understood that the first terminal 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated into one or more processors.

A memory may also be disposed in the processor 110, and is configured to store instructions and data. In some embodiments, the memory in the processor 110 may be a cache. The memory may store an instruction or data that is recently used or cyclically used by the processor 110.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal serial bus (universal serial bus, USB) interface, and/or the like.

The user interface 130 is configured to transmit data between the first terminal 100 and a peripheral device, or may be configured to connect to a headset to play back an audio through the headset. The user interface 130 may be further configured to connect to another device such as an augmented reality (augmented reality, AR) device.

In this embodiment of this application, the first terminal may broadcast a trip service through a headset when the first terminal is externally connected to the headset through the user interface 130.

The power management module 141 receives an input of the charging management module 140. The power management module 141 supplies power to the processor 110, the internal memory 121, the display screen 194, the camera 193, the wireless communication module 160, and the like.

A wireless communication function of the first terminal 100 may be implemented by using the antenna 1, the antenna 2, the mobile communication module 150, the wireless communication module 160, and the like. The antenna 1 and the antenna 2 are configured to transmit and receive an electromagnetic wave signal. An antenna in the first terminal 100 may be configured to cover a single communication band or a plurality of communication bands. Different antennas may further be multiplexed to improve utilization of the antennas. For example, the antenna 1 may be multiplexed as a diversity antenna of a wireless local area network.

The mobile communication module 150 may provide a wireless communication solution that includes 2G/3G/4G/5G and the like and that is applied to the first terminal 100. The wireless communication module 160 may provide a wireless communication solution that includes a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like and that is applied to the first terminal 100.

In some embodiments, the antenna 1 and the mobile communication module 150 of the first terminal 100 are coupled, and the antenna 2 and the wireless communication module 160 are coupled, so that the first terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), long term evolution (long term evolution, LTE), BT, a GNSS, a WLAN, NFC, FM, an IR technology, and/or the like.

The first terminal 100 implements a display function through the display screen 194. The display screen 194 is configured to display an image, a video, and the like. The display screen 194 includes a display panel. In some embodiments, the first terminal 100 may include 1 or N display screens 194, where N is a positive integer greater than 1. In this embodiment of this application, the first terminal may display a recommended personalized service through the display screen.

The first terminal 100 may implement a photographing function through the camera 193 or the like. The camera 193 is configured to capture a still image or a video.

The external memory interface 120 may be configured to connect to an external storage card to expand a storage capability of the first terminal 100. The external storage card communicates with the processor 110 by using the external memory interface 120, to implement a data storage function.

The internal memory 121 may be configured to store computer-executable program code. The executable program code includes an instruction. The internal memory 121 may include a program storage area and a data storage area. The program storage area may store an operating system, an application program required by at least one function (such as a voice playing function and an image playing function), and the like.

The pressure sensor 180A is configured to sense a pressure signal, and may convert the pressure signal into an electrical signal. In some embodiments, the pressure sensor 180A may be disposed on the display screen 194.

The acceleration sensor 180E may detect magnitude of acceleration of the first terminal 100 in various directions (generally on three axes). The fingerprint sensor 180H is configured to acquire a fingerprint. The first terminal 100 may implement fingerprint-based unlock, application lock access, fingerprint-based photographing, fingerprint-based call answering, and the like by using a feature of the acquired fingerprint.

The touch sensor 180K is also referred to as a "touch device". The touch sensor 180K may be disposed on the display screen 194. The touch sensor 180K and the display screen 194 form a touchscreen. The touch sensor 180K is configured to detect a touch operation on or near the touch sensor 180K.

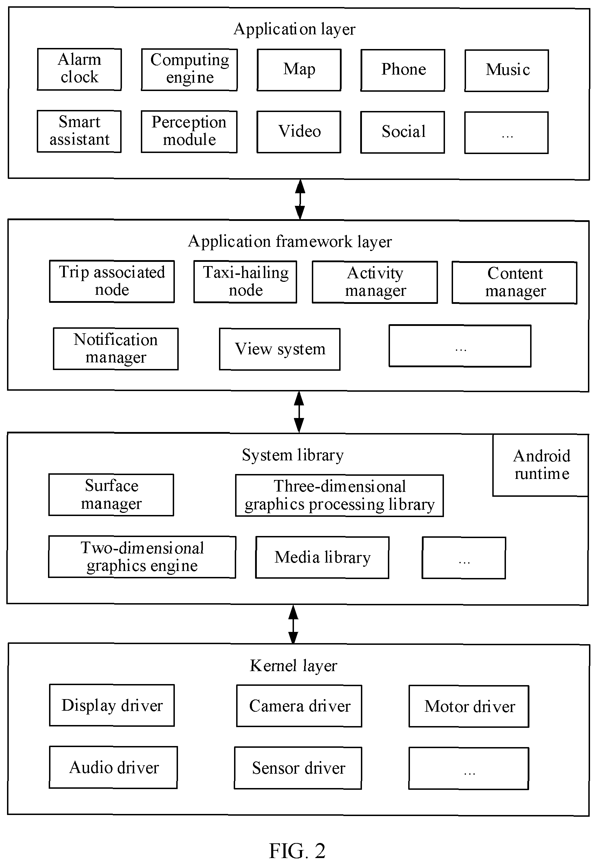

Exemplarily, FIG. 2 is a schematic diagram of a software structure of a first terminal according to an embodiment of this application. As shown in FIG. 2, a layered architecture divides a software system of the first terminal 100 into several layers, and each layer has a clear role and task. The layers communicate with each other through a software interface.

In some embodiments, an Android system may be divided into five layers that are respectively an application (applications) layer, an application framework (application framework) layer, Android runtime (Android runtime), a system library, and a kernel layer.

In a possible manner, the application layer may include a series of application package, and the application layer runs an application by calling an application programming interface (application programming interface, API) provided by the application framework layer. For example, as shown in FIG. 2, the application packages may include alarm clock, map, phone, music, video, social applications, and/or the like.

In this embodiment of this application, the application layer may further include a computing engine, a smart assistant, and a perception module. The smart assistant may be understood as a YOYO suggestion.

In a possible manner, the application framework layer is an API and a programming framework for an application at the application layer. For example, as shown in FIG. 2, the application framework layer may include a content provider, a view system, an activity manager, a notification manager, and the like. The application framework layer further includes some predefined functions and the like.

The content provider is configured to store and acquire data, so that the data can be accessed by an application. For example, the data may include a browsing history, a bookmark, calls made and received, a video, an image, an audio, a phone book, and/or the like. The view system includes visual controls, such as a text display control and a picture display control. The view system may be configured to construct an application. A display interface may include one or more views. For example, a display interface including a message notification icon may include a text display view and a picture display view.

The notification manager enables an application to display notification information on a status bar, may be configured to convey a notification-type message, and may automatically disappear after a short pause without user interaction. For example, the notification manager is configured to notify download completion, a message prompt, and the like. The notification manager may alternatively be a notification that appears on a top status bar of the system in a form of a graph or a scroll bar text, for example, a notification of an application running on the background, or may be a notification that appears on the screen in a form of a dialog window. For example, text information is displayed on the status bar, an alert sound is played, the first terminal 100 vibrates, an indicator light blinks, and the like. The activity manager is configured to manage a life cycle of each application and a navigation back function, and is responsible for creation of a main thread of Android and maintenance of the life cycle of each application.

In this embodiment of this application, the application framework layer may further include a trip associated node and a taxi-hailing node. For example, the trip associated node may be understood as a flight associated node when the trip information is flight information.

In a possible manner, the Android runtime is responsible for scheduling and managing the Android system, and may include a core library and a virtual machine. The core library includes two parts: one part is a performance function that the Java language needs to invoke, and the other part is a core library of Android. The virtual machine is configured to execute functions such as object security and exception management, lifecycle management, stack management, thread management, and garbage collection.

It should be noted that the application layer and the application framework layer are run in the virtual machine. The virtual machine executes Java files of the application layer and the application framework layer as binary files.

In a possible manner, the system library may include a plurality of function modules, for example, a surface manager (surface manager), a media library (Media Libraries), a three-dimensional graphics processing library (for example, OpenGL ES), a two-dimensional graphics engine, and the like.

The surface manager is configured to manage a display subsystem, and provide fusion of two-dimensional and three-dimensional layers for a plurality of applications. The three-dimensional graphics processing library is configured to implement three-dimensional graphics drawing, image rendering, composition, layer processing, and the like. The two-dimensional graphics engine is a drawing engine for two-dimensional drawings. The media library supports playback and recording of a plurality of commonly used video formats, audios, static image files, and the like. The media library may support a plurality of audio and video encoding formats such as MPEG4, H.264, MP3, AAC, AMR, JPG, and PNG.

In a possible manner, the kernel layer is a layer between hardware and software. The kernel layer includes at least a display driver, an audio driver, a camera driver, a sensor driver, a motor driver, or the like, which is not limited in this embodiment of this application.

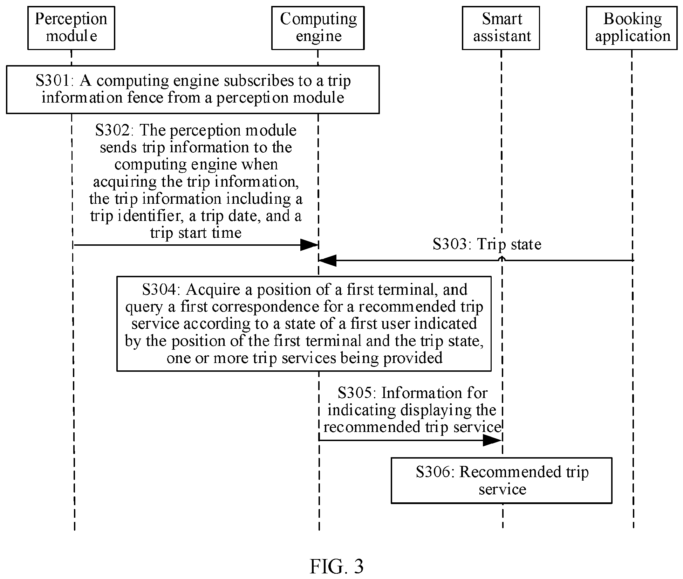

In combination with the above content, exemplarily, FIG. 3 is a schematic flowchart of a trip prompting method according to an embodiment of this application. As shown in FIG. 3, the method may include the following steps:

S301: A computing engine subscribes to a trip information fence from a perception module.

In this embodiment of this application, referring to FIG. 2, the computing engine may subscribe to the trip information fence from the perception module through a trip associated node, so as to instruct the perception module to monitor trip information, so that the perception module can monitor a notification state of the trip information.

S302: The perception module sends trip information to the computing engine when the perception module acquires the trip information.

In this embodiment of this application, the trip information may include a trip identifier, a trip date, and a trip start time. The trip date may include a trip start date and/or a trip end date. For example, when the trip information is flight information, the trip identifier is a flight number, the trip start date may be understood as a flight takeoff date, the trip end date may be understood as a flight landing date, and the trip start time may be understood as a flight takeoff time.

It may be understood that specific content of the trip information may also be set according to an actual application requirement, which is not limited in this embodiment of this application.

In this embodiment of this application, the perception module acquiring the trip information may be understood as follows. When a booking application receives trip information that the first user subscribes to, the booking application may send the trip information to the perception module in the first terminal. Alternatively, when the first terminal receives, through the perception module, the first user's operation of booking trip information, the perception module may send, to the booking application, information for indicating acquiring the trip information, and when the booking application receives the information, the booking application may send the trip information to the perception module, so that the perception module can acquire the trip information.

S303: The computing engine acquires a trip state from a booking application.

In this embodiment of this application, the trip state is acquired by the computing engine from the booking application based on the trip identifier, the trip date, and the trip start time. For example, the computing engine may send, to the booking application, the trip identifier, the trip date, the trip start time, and the information for indicating acquiring the trip state, and after the booking application receives the information, the booking application may obtain a trip state corresponding to the trip identifier, the trip date, and the trip start time based on the trip identifier, the trip date, and the trip start time. Therefore, the booking application sends the trip state to the computing engine. The trip state is related to a trip ticket. For example, when the trip ticket is an airline ticket, the trip state is an airline ticket state, and the booking application may be "Umetrip" or the like. When the trip ticket is a train ticket, the trip state is a train ticket state, and the booking application may be "Railway 12306" or the like.

S304: The computing engine acquires a position of a first terminal, and queries a first correspondence for a recommended trip service according to a state of a first user indicated by the position of the first terminal and the trip state.

In this embodiment of this application, there may be a plurality of trip services. When the first user enables a positioning function in the first terminal, the computing engine may acquire the position of the first terminal through a global positioning system (global positioning system, GPS). Then, the computing engine may query the first correspondence for the recommended trip service according to the state of the first user indicated by the position of the first terminal and the trip state.

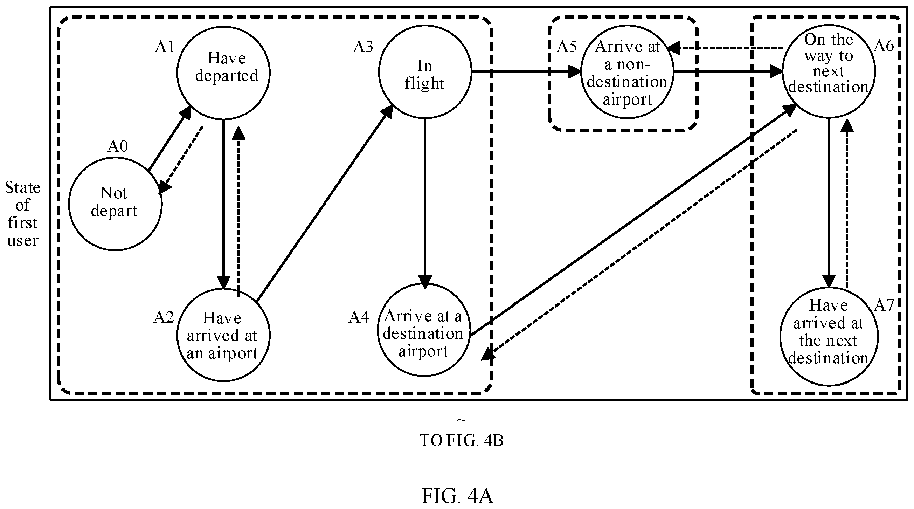

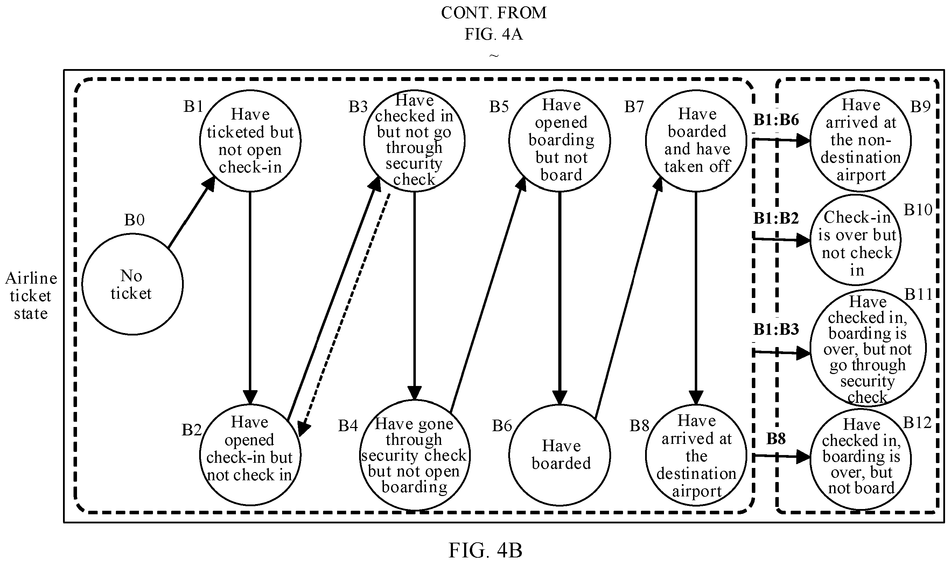

In combination with the content of S303 and S304, when the trip information is flight information, the trip ticket is an airline ticket, and the trip state is an airline ticket state. Exemplarily, FIG. 4A and FIG. 4B are schematic diagrams of a flight travel scenario associated event graph according to an embodiment of this application. FIG. 4A and FIG. 4B describe the state of the first user and the airline ticket state.

As shown in FIG. 4A, the state of the first user may be described as A0 to A7. A0 is used for indicating that the state of the first user is Not depart, A1 is used for indicating that the state of the first user is Have departed, A2 is used for indicating that the state of the first user is Have arrived at an airport, A3 is used for indicating that the state of the first user is In flight, A4 is used for indicating that the state of the first user is Arrive at a destination airport, A5 is used for indicating that the state of the first user is Arrive at a non-destination airport, A6 is used for indicating that the state of the first user is On the way to next destination, and A7 is used for indicating that the state of the first user is Have arrived at the next destination. As shown in FIG. 4A and FIG. 4B, the airline ticket state may be described as B0 to B 12. B0 is used for indicating that the airline ticket state is No ticket, B1 is used for indicating that the airline ticket state is Have ticketed but not open check-in, B2 is used for indicating that the airline ticket state is Have opened check-in but not check in, B3 is used for indicating that the airline ticket state is Have checked in but not go through security check, B4 is used for indicating that the airline ticket state is Have gone through security check but not open boarding, B5 is used for indicating that the airline ticket state is Open boarding but not board, B6 is used for indicating that the airline ticket state is Have boarded, B7 is used for indicating that the airline ticket state is Have boarded and have taken off, B8 is used for indicating that the airline ticket state is Have arrived at the destination airport, B9 is used for indicating that the airline ticket state is Have arrived at the non-destination airport, B10 is used for indicating that the airline ticket state is Check-in is over but not check in, B11 is used for indicating that the airline ticket state is Have checked in, boarding is over, but not go through security check, and B12 is used for indicating that the airline ticket state is Have checked in, boarding is over, but not board.

In FIG. 4B, "B1:B6" may be understood as that the airline ticket state indicated by any one of B1 to B6 may directly point to the airline ticket state indicated by B9, "B1:B2" may be understood as that the airline ticket state indicated by either of B1 and B2 may directly point to the airline ticket state indicated by B10, "B1:B3" may be understood as that the airline ticket state indicated by any one of B1 to B3 may directly point to the airline ticket state indicated by B11, and the airline ticket state indicated by B8 may also directly point to the airline ticket state indicated by B12.

In FIG. 4A, arrows in A0 to A7 are solid arrows, and are used for indicating normal event logic when the first user is from Not depart to Have arrived at the next destination. A0 to A7 further include dotted arrows, and the dotted arrows are used for indicating abnormal conditions. For example, when the first user arrives at an airport, if the first user finds that he/she has forgotten something and needs to go home to pick up it, the state of the first user may point from A2 to A1, and A1 to A0. The other dotted lines in the figure are also abnormal conditions as described above. Details are not described herein again.

In FIG. 4A and FIG. 4B, a dotted box may indicate a scenario. For example, a dotted box corresponding to A0 to A4 may be understood as a scenario where the first user is from Not depart to a destination airport, a dotted box corresponding to A5 may be understood as a scenario where the first user is at a non-destination airport, and a dotted box corresponding to A6 and A7 may be understood as a scenario where the first user is from On the way to next destination to next destination airport. A dotted box corresponding to B0 to B8 may be understood as a scenario corresponding to the airline ticket state when the first user is from Not depart to Have arrived at the destination airport, and a dotted box corresponding to B9 to B12 may be understood as a scenario corresponding to the airline ticket state when the first user is at the airport.

Referring to FIG. 4A and FIG. 4B, the computing engine may query the first correspondence for the recommended trip service according to the state of the first user indicated by the position of the first terminal and the trip state. The first correspondence includes a trip service corresponding to a user state and an airline ticket state.

The first correspondence may include: the trip service being a ticketing feedback service, a flight change service, a travel preparation reminding service, a morning flight alarm clock service, and a departure reminding service when the state of the first user is Not depart and the airline ticket state is Have ticketed but not open check-in; the trip service being a flight change service and an insurance recommendation service when the state of the first user is Have departed and the airline ticket state is Have ticketed but not open check-in; and the trip service being a flight change service, an electronic boarding pass service, and a gate change service when the state of the first user is Have arrived at an airport and the airline ticket state is Have ticketed but not open check-in.

The first correspondence may also include: the trip service being a check-in service, a flight change service, a travel preparation reminding service, a morning flight alarm clock service, and a departure reminding service when the state of the first user is Not depart and the airline ticket state is Have opened check-in but not check in; the trip service being a check-in service, a flight change service and an insurance recommendation service when the state of the first user is Have departed and the airline ticket state is Have opened check-in but not check in; and the trip service being a flight change service, an electronic boarding pass service, and a gate change service when the state of the first user is Have arrived at an airport and the airline ticket state is Have opened check-in but not check in.

The first correspondence may also include: the trip service being a flight change service, a travel preparation reminding service, a morning flight alarm clock service, and a departure reminding service when the state of the first user is Not depart and the airline ticket state is Have checked in but not go through security check; the trip service being a flight change service and an insurance recommendation service when the state of the first user is Have departed and the airline ticket state is Have checked in but not go through security check; and the trip service being a flight change service, an electronic boarding pass service, a gate change service, and a boarding urging service when the state of the first user is Have arrived at an airport and the airline ticket state is Have checked in but not go through security check.

The first correspondence may also include: the trip service being a flight change service, an electronic boarding pass service, and a gate change service when the state of the first user is Have arrived at an airport and the airline ticket state is Have gone through security check but not open boarding; the trip service being a flight change service, an electronic boarding pass service, a gate change service, and a boarding urging service when the state of the first user is Have arrived at an airport and the airline ticket state is Have gone through security check, have opened boarding, but not board; the trip service being an electronic boarding pass service when the state of the first user is Have arrived at an airport and the airline ticket state is Have boarded; and the trip service being an electronic boarding pass service when the state of the first user is In flight and the airline ticket state is Have boarded and have taken off.

The first correspondence may also include: the trip service being a baggage carousel reminding service when the state of the first user is Arrive at a destination airport and the airline ticket state is Have arrived at the destination airport; the trip service being a baggage carousel reminding service when the state of the first user is Arrive at a non-destination airport and the airline ticket state is Have arrived at the non-destination airport; the trip service being a next destination reminding service when the state of the first user is On the way to next destination and the airline ticket state is Have arrived at the destination airport; the trip service being a next destination reminding service when the state of the first user is On the way to next destination and the airline ticket state is Have arrived at the non-destination airport; the trip service being a trip filing service when the state of the first user is Have arrived at the next destination and the airline ticket state is Have arrived at the destination airport; and the trip service being a trip filing service when the state of the first user is Have arrived at the next destination and the airline ticket state is Have arrived at the non-destination airport.

The first correspondence may also include: the trip service being a ticket change and refund reminding service when the state of the first user is Not depart and the airline ticket state is Check-in is over but not check in; the trip service being a ticket change and refund reminding service when the state of the first user is Have departed and the airline ticket state is Check-in is over but not check in; and the trip service being a ticket change and refund reminding service when the state of the first user is Have arrived at an airport and the airline ticket state is Check-in is over but not check in.

The first correspondence may also include: the trip service being a ticket change and refund reminding service when the state of the first user is Not depart and the airline ticket state is Have checked in, boarding is over, but not go through security check; the trip service being a ticket change and refund reminding service when the state of the first user is Have departed and the airline ticket state is Have checked in, boarding is over, but not go through security check; the trip service being a ticket change and refund reminding service when the state of the first user is Have arrived at an airport and the airline ticket state is Have checked in, boarding is over, but not go through security check; and the trip service being a ticket change and refund reminding service when the state of the first user is Have arrived at an airport and the airline ticket state is Have gone through security check, boarding is over, but not board.

In combination with the content of the first correspondence described above, Table 1 shows trip services corresponding to states of the first user and airline ticket states. Content of Table 1 is shown as follows:

Table 1

| Airline ticket state / State of first user | Not depart | Have departed | Have arrived at an airport | In flight | Arrive at a destination airport | Arrive at a non-destination airport | On the way to next destination | Have arrived at the next destination |
|---|---|---|---|---|---|---|---|---|
| No ticket | None | None | None | None | None | None | None | None |
| Have ticketed but not open check-in | ①③⑧⑨⑩ | ③⑭ | ③④⑤ | None | None | None | None | None |
| Have opened check-in but not check in | ②③⑧⑨⑩ | ②③⑭ | ③④⑤ | None | None | None | None | None |
| Have checked in but not go through security check | ③⑧ ⑨⑩ | ③⑭ | ③④ ⑤⑥ | None | None | None | None | None |
| Have gone through security check but not open boarding | None | None | ③④⑤ | None | None | None | None | None |
| Have gone through security check, have opened boarding, but not board | None | None | ③④ ⑤⑥ | None | None | None | None | None |
| Have boarded | None | None | ④ | None | None | None | None | None |

(continued)

| Airline ticket state / State of first user | Not depart | Have departed | Have arrived at an airport | In flight | Arrive at a destination airport | Arrive at a non-destination airport | On the way to next destination | Have arrived at the next destination |
|---|---|---|---|---|---|---|---|---|
| Have boarded and have taken off | None | None | None | ④ | None | None | None | None |
| Have arrived at the destination airport | None | None | None | None | ⑦ | None | ⑪ | ⑬ |
| Have arrived at the non-destination airport | None | None | None | None | None | ⑦ | ⑪ | ⑬ |
| Check-in is over but not check in | ⑫ | ⑫ | ⑫ | None | None | None | None | None |
| Have checked in, boarding is over, but not go through security check | ⑫ | ⑫ | ⑫ | None | None | None | None | None |
| Have gone through security check, boarding is over, but not board | None | None | ⑫ | None | None | None | None | None |

In Table 1, ① is used for indicating that the trip service is a ticketing feedback server, ② is used for indicating that the trip service is a check-in service, ③ is used for indicating that the trip service is a flight change service, for example, flight delay or flight cancellation, ④ is used for indicating that the trip service is an electronic boarding pass service, ⑤ is used for indicating that the trip service is a gate change service, ⑥ is used for indicating that the trip service is a boarding urging service, ⑦ is used for indicating that the trip service is a baggage carousel reminding service, ⑧ is used for indicating that the trip service is a travel preparation reminding service, for example, reminding of weather, clothing, cards, and the like, ⑨ is used for indicating that the trip service is a morning flight alarm clock service, ⑩ is used for indicating that the trip service is a departure reminding service, for example, traffic condition reminding, taxi-hailing reminding, navigation reminding, and the like, ⑪ is used for indicating that the trip service is a next destination reminding service, ⑫ is used for indicating that the trip service is a ticket change and refund reminding service, ⑬ is used for indicating that the trip service is a trip filing service, for example, tracking of a lost luggage, and the like, and ⑭ is used for indicating that the trip service is an insurance recommendation service, for example, delay insurance, epidemic insurance, and the like. "None" in Table 1 is used for indicating that there is no recommended trip service.

In combination with the content of S303 and S304, when the trip information is train ticket information, the trip state is a train ticket state, and the state of the first user may include Not depart, Have departed, Arrive at a starting train station, On the road, Arrive at a destination train station, and Arrive at a non-destination train station, the train ticket state may include No ticket, Have ticketed, Open ticket check but not enter the train station, Have entered the train station, Have started, Pass through an intermediate station, Arrive at the destination train station, Arrive at the non-destination train station, and Ticket check is over but not enter the train station, and the first correspondence may include a trip service corresponding to the state of the first user and the train ticket state.

The first correspondence may include: the trip service being a ticketing change service, a travel preparation reminding service, a morning train alarm clock service, a departure reminding service, a train change service, and a dining reservation service when the state of the first user is Not depart and the train ticket state is Have ticketed; the trip service being a train change service when the state of the first user is Have departed and the train ticket state is Have ticketed; the trip service being a train change service and an electronic ticket service when the state of the first user is Arrive at a starting train station and the train ticket state is Have ticketed; the trip service being a train change service when the state of the first user is Not depart and the train ticket state is Open ticket check but not enter the train station; and the trip service being a train change service when the state of the first user is Have departed and the train ticket state is Open ticket check but not enter the train station.

The first correspondence may also include: the trip service being an electronic ticket service and a ticket check reminding service when the state of the first user is Arrive at a starting train station and the train ticket state is Open ticket check but not enter the train station; the trip service being an electronic ticket service when the state of the first user is Arrive at a starting train station and the train ticket state is Have entered the train station; the trip service being an electronic ticket service when the state of the first user is On the road and the train ticket state is Have started; the trip service being an electronic ticket service when the state of the first user is On the road and the train ticket state is Pass through an intermediate station; and the trip service being an electronic ticket service when the state of the first user is On the road and the train ticket state is Arrive at the destination station.

The first correspondence may also include: the trip service being a next destination reminding service when the state of the first user is Arrive at a destination train station and the train ticket state is Arrive at the destination train station; the trip service being a ticket change and refund reminding service when the state of the first user is Arrive at a non-destination station and the train ticket state is Arrive at the non-destination station; the trip service being a ticket change and refund reminding service when the state of the first user is Not depart and the train ticket state is Ticket check is over but not enter the train station; the trip service being a ticket change and refund reminding service when the state of the first user is Have departed and the train ticket state is Ticket check is over but not enter the train station; and the trip service being a ticket change and refund reminding service when the state of the first user is Arrive at a starting train station and the train ticket state is Ticket check is over but not enter the train station.

In combination with the above content, Table 2 shows trip services corresponding to states of the first user and train ticket states. In Table 2, ① is used for indicating that the trip service is a ticketing feedback service, ② is used for indicating that the trip service is a travel preparation reminding service, for example, reminding of weather, clothing, cards, and the like, ③ is used for indicating that the trip service is a morning train alarm clock service, ④ is used for indicating that the trip service is a departure reminding service, for example, reminding of road conditions, taxi hailing, navigation, and the like, ⑤ is used for indicating that the trip service is a train change service, for example, a train is delayed, the train is suspended, and the like, ⑥ is used for indicating that the trip service is an electronic ticket service, ⑦ is used for indicating that the trip service is a ticket check reminding service, ⑧ is used for indicating that the trip service is a next destination reminding service, ⑨ is used for indicating that the trip service is a ticket change and refund reminding service, and ⑩ is used for indicating that the trip service is a dining reservation service. "None" in Table 2 is used for indicating that there is no recommended trip service.

**Table 2**

| Train ticket state State of first user | Not depart | Have departed | Arrive at a starting train station | On the road | Arrive at a destination train station | Arrive at a non-destination train station |
|---|---|---|---|---|---|---|
| No ticket | None | None | None | None | None | None |
| Have ticketed | ①②③④⑤⑥ | ⑤ | ⑤⑥ | None | None | None |
| Open ticket check but not enter the train station | ⑤ | ⑤ | ⑥⑦ | None | None | None |
| Have entered the train station | None | None | ⑥ | None | None | None |
| Have started | None | None | None | ⑥ | None | None |
| Pass through an intermediate station | None | None | None | ⑥ | None | None |

(continued)

| Train ticket state State of first user | Not depart | Have departed | Arrive at a starting train station | On the road | Arrive at a destination train station | Arrive at a non-destination train station |
|---|---|---|---|---|---|---|
| Arrive at the destination train station | None | None | None | ⑥ | ⑧ | None |
| Arrive at the non-destination train station | None | None | None | None | None | ⑨ |
| Ticket check is over but not enter the train station | ⑨ | ⑨ | ⑨ | None | None | None |

S305: The computing engine sends, to a smart assistant, information for indicating displaying a recommended trip service.

S306: The smart assistant recommends a trip service.

In this embodiment of this application, when the first terminal recommends the trip service through the smart assistant, the first terminal may recommend the trip service based on a service reminding principle. For example, the first terminal may perform multi-terminal deployment based on the YOYO suggestion, and remind the first user in time, so as to be timely and non-interfering.

The service reminding principle may include a device reminding principle based on attention of the first user. The device reminding principle based on attention of the first user may be understood as that the first terminal performs reminding according to a state of the first user currently using a device, to ensure timely access, so that the first user knows the trip service in time. The service reminding principle may further include a reminding principle based on a degree of urgency of a reminding event. The reminding principle based on a degree of urgency of a reminding event may be understood as follows: since the first terminal provides a plurality of trip services, the first terminal can select the most important service from the plurality of trip services according to changes in degrees of importance and urgency of the reminding event, and select appropriate strong, medium, and weak reminding policies based on a current device state and a reminding manner supported by the device, so that the first user can know a recommended service in time.

It should be noted that in the strong, medium, and weak reminding policies, the strong reminding policy may be understood as a reminding policy corresponding to a behavior interfering with the first user. For example, the first user may be reminded in one or more manners of ringing, vibration, or a pop-up window. The vibration may be continuous vibration. The medium reminding policy may be understood as reminding the first user by ringing. A ringing time may be a few seconds. The weak reminding policy may be understood as reminding the first user in a form of notification.

In an example, when the trip information is flight information, if the state of the first user is Have departed and the airline ticket state is Have opened check-in but not check in, recommended trip services that the first terminal may obtain from the first correspondence may include a check-in service, a flight change service, and an insurance recommendation service. Since the airline ticket state is Have opened check-in but not check in, the check-in service has a higher priority than other services.

It may be understood that the first terminal may determine service priorities in the plurality of recommended trip services based on the state of the first user and/or the airline ticket state. When one service has a higher priority than other services, the first user may recommend the trip service with the highest priority through one or more of a mobile phone, a watch, and a headset.

In a scenario, the first user wears the headset to listen to music, and the mobile phone is in a locked state. The mobile phone may display the trip service to the first user through notification and screen-on vibration. Since the user wears the headset, the headset can perform voice broadcast, so that the travel service can be known in time through the headset.

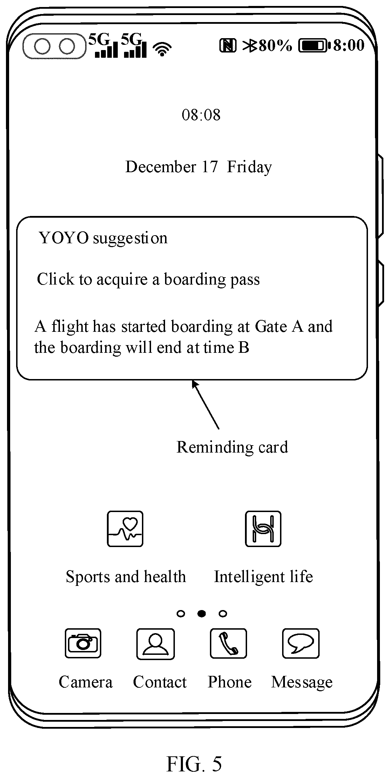

Exemplarily, FIG. 5 is a schematic diagram of an interface of a first terminal displaying a trip service according to an embodiment of this application. The first terminal may display, through the YOYO suggestion, the interface shown in FIG. 5. The interface includes a reminding card. The reminding card is used for reminding the user that a flight has started boarding at Gate A and the boarding will end at time B. The reminding card may further include a control for clicking to acquire a boarding pass. Based on the control, the first user may view information such as a seat number from the boarding pass.

At the same time, content broadcast in the headset may be: the YOYO suggestion reminds you that a flight has started boarding at Gate A and the boarding will end at time B.

In another scenario, the first user is resting, the first user wears a watch, and the mobile phone is in a sleep state. The mobile phone may display the trip service to the first user through notification and screen-on vibration, and the watch may also display the trip service to the first user through notification and screen-on vibration.

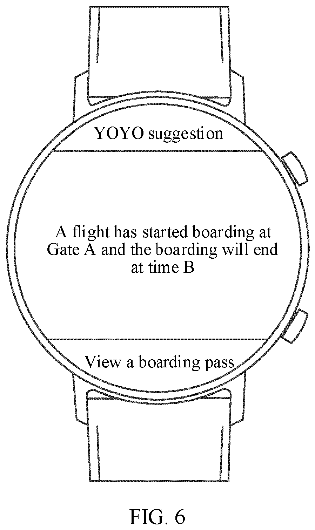

A diagram of an interface of the mobile phone displaying the trip service may be shown in FIG. 5. Exemplarily, FIG. 6 is a schematic diagram of an interface of a watch displaying a trip service according to an embodiment of this application. As shown in FIG. 6, content displayed on the watch may be: the YOYO suggestion: a flight has started boarding at Gate A and the boarding will end at time B. A control for viewing a boarding pass may be further displayed on the watch. Based on the control, the first user may view information such as a seat number from the boarding pass.

In another scenario, the first user is playing a game on a mobile phone, the user wears a headset, and the user wears a watch. The mobile phone may display a reminding card for urging boarding, the headset may broadcast information for urging boarding, and the watch may also display the information for urging boarding.

In the above three scenarios, the mobile phone recommends the trip service to the first user through notification and screen-on vibration, the headset recommends the trip service to the first user through voice broadcast, and the watch recommends the trip service to the first user through notification and screen-on vibration. It may be understood that the mobile phone may also recommend the trip service to the first user in one or more manners of notification, a desktop card, a floating window, ringing, and vibration, the headset may also recommend the trip service to the first user in one or more manners of ringing and voice broadcast, and the watch may also recommend the trip service to the first user in one or more manners of notification, a dial card, ringing, and vibration.

Exemplarily, Table 3 shows manners in which the mobile phone, the headset, and the watch recommend the trip service to the first user in different mobile phone states. "None" in Table 3 is used for indicating that the mobile phone, the headset, or the watch does not recommend the trip service to the first user in the manner. Content of Table 3 may be shown as follows:

**Table 3**

| Mobile phone state | | | | Mobile phone | | | | | Headset | | Watch | | | |
|---|---|---|---|---|---|---|---|---|---|---|---|---|---|---|
| | | | | Notification | Desktop card | Floating window | Ringing | Vibration | Ringing | voice broadcast | notification | dial card | Ringing | Vibration |
| Screen off | Sleep | | | √ | None | None | √ | √ | √ | √ | √ | None | √ | √ |
| | Active | | | √ | None | None | √ | √ | √ | √ | √ | None | | √ |
| Screen on | Lock screen | | | √ | None | None | √ | √ | √ | √ | √ | None | | √ |
| | Desktop | Home screen | | √ | √ | None | √ | √ | √ | √ | √ | √ | √ | √ |
| | | Leftmost home screen | | √ | √ | None | √ | √ | √ | √ | √ | √ | √ | √ |
| | | Another screen | | √ | None | None | √ | √ | √ | √ | √ | √ | √ | √ |
| | Application | Communication type | Voice call | √ | None | √ | √ | √ | √ | √ | √ | None | √ | √ |
| | | | Video call | √ | None | √ | √ | √ | √ | √ | √ | None | √ | √ |
| | | Game type | Play a game | √ | None | √ | √ | √ | √ | √ | √ | None | √ | √ |
| | | Audio-video type | Watch a video | √ | None | √ | √ | √ | √ | √ | √ | None | √ | √ |
| | | | Listen to music | √ | None | √ | √ | √ | √ | √ | √ | None | √ | √ |
| | | News reading type | Read news | √ | None | √ | √ | √ | √ | √ | √ | None | √ | √ |

As shown in Table 3, the content of Table 3 may be described as follows:

When the mobile phone is in a screen-off and sleep state, the mobile phone may recommend the trip service to the first user in one or more manners of notification, ringing, and vibration, the headset may recommend the trip service to the first user in one or more manners of ringing and voice broadcast, and the watch may recommend the trip service to the first user in one or more manners of notification, ringing, and vibration. When the mobile phone is in a screen-off and active state, the mobile phone may recommend the trip service to the first user in one or more manners of notification, ringing, and vibration, the headset may recommend the trip service to the first user in one or more manners of ringing and voice broadcast, and the watch may recommend the trip service to the first user in one or more manners of notification, ringing, and vibration.

When the mobile phone is in a screen-on and locked state, the mobile phone may recommend the trip service to the first user in one or more manners of notification, ringing, and vibration, the headset may recommend the trip service to the first user in one or more manners of ringing and voice broadcast, and the watch may recommend the trip service to the first user in one or more manners of notification, ringing, and vibration. When the mobile phone is in a screen-on state and the mobile phone displays the home screen on the desktop, the mobile phone may recommend the trip service to the first user in one or more manners of notification, a desktop card, ringing, and vibration, the headset may recommend the trip service to the first user in one or more manners of ringing and voice broadcast, and the watch may recommend the trip service to the first user in one or more manners of notification, a dial card, ringing, and vibration.

When the mobile phone is in a screen-on state and the mobile phone displays the leftmost home screen on the desktop, the mobile phone may recommend the trip service to the first user in one or more manners of notification, a desktop card, ringing, and vibration, the headset may recommend the trip service to the first user in one or more manners of ringing and voice broadcast, and the watch may recommend the trip service to the first user in one or more manners of notification, a dial card, ringing, and vibration. When the mobile phone is in a screen-on state and the mobile phone displays another screen on the desktop, the mobile phone may recommend the trip service to the first user in one or more manners of notification, ringing, and vibration, the headset may recommend the trip service to the first user in one or more manners of ringing and voice broadcast, and the watch may recommend the trip service to the first user in one or more manners of notification, a dial card, ringing, and vibration.

When the mobile phone is in a screen-on state and the first user makes a voice call in the communication-type application through the mobile phone, the mobile phone may recommend the trip service to the first user in one or more manners of notification, a floating window, ringing, and vibration, the headset may recommend the trip service to the first user in one or more manners of ringing and voice broadcast, and the watch may recommend the trip service to the first user in one or more manners of notification, ringing, and vibration. When the mobile phone is in a screen-on state and the first user makes a video call in the communication-type application through the mobile phone, the mobile phone may recommend the trip service to the first user in one or more manners of notification, a floating window, ringing, and vibration, the headset may recommend the trip service to the first user in one or more manners of ringing and voice broadcast, and the watch may recommend the trip service to the first user in one or more manners of notification, ringing, and vibration.

When the mobile phone is in a screen-on state and the first user plays a game in the game-type application through the mobile phone, the mobile phone may recommend the trip service to the first user in one or more manners of notification, a floating window, ringing, and vibration, the headset may recommend the trip service to the first user in one or more manners of ringing and voice broadcast, and the watch may recommend the trip service to the first user in one or more manners of notification, ringing, and vibration. When the mobile phone is in a screen-on state and the first user watches a video in the audio-video-type application through the mobile phone, the mobile phone may recommend the trip service to the first user in one or more manners of notification, a floating window, ringing, and vibration, the headset may recommend the trip service to the first user in one or more manners of ringing and voice broadcast, and the watch may recommend the trip service to the first user in one or more manners of notification, ringing, and vibration.

When the mobile phone is in a screen-on state and the first user listens to music in the audio-video-type application through the mobile phone, the mobile phone may recommend the trip service to the first user in one or more manners of notification, a floating window, ringing, and vibration, the headset may recommend the trip service to the first user in one or more manners of ringing and voice broadcast, and the watch may recommend the trip service to the first user in one or more manners of notification, ringing, and vibration. When the mobile phone is in a screen-on state and the first user reads new in the news-reading-type application through the mobile phone, the mobile phone may recommend the trip service to the first user in one or more manners of notification, a floating window, ringing, and vibration, the headset may recommend the trip service to the first user in one or more manners of ringing and voice broadcast, and the watch may recommend the trip service to the first user in one or more manners of notification, ringing, and vibration.

In combination with the content shown in Table 3, it may be understood that the strong reminding policy may also be understood as reminding the user through one or more of a mobile phone, a watch, and a headset, and there may be a plurality of reminding manners in the selected device. For example, when the mobile phone is in a screen-off and sleep state, the mobile phone may recommend the trip service to the first user through notification, ringing, and vibration, so as to interfere with the behavior of the first user based on the selected reminding manner, so that the first user can know the recommended service in time. The medium reminding policy may also be understood as reminding the user through one or more of a mobile phone, a watch, and a headset, and the reminding manner in the selected device may be part of the reminding manners. For example, when the mobile phone is in a screen-off and sleep state, the mobile phone may recommend the trip service to the first user through vibration. The weak reminding policy may also be understood as reminding the user through one or more of a mobile phone, a watch, and a headset, and the reminding manner in the selected device may be the reminding manner of notification.

In combination with the content shown in Table 3, the first user may also know the trip service through another wearable device. The mobile phone and the watch recommend the trip service to the first user based on automatic perception capability of a plurality of devices based on a MagicRing. It may be understood that the first user may know the trip service through the mobile phone, or know the trip service through the watch, and or know the trip service through another device, which is not limited in this embodiment of this application.

Based on the above content, the user state and the trip state may form an event map, and a trip service corresponding to the user state and the trip state may be called a service state matrix. In this way, based on a user intention indicated by the user state, the first terminal can acquire, from the service state matrix of the event map, a service required by the user, so as to improve a prediction speed and accuracy. Moreover, for the first user, the first terminal records characteristic data of the trip service used by the first user through perception, and learns habitual preference of the first user based on the characteristic data. In this way, the first user can be provided with a more accurate and personalized service based on the service state matrix.

In the above content, the trip service recommended by the first terminal includes a departure reminding service. In a possible implementation, the first terminal may remind the user to depart based on the trip start time. For example, When the trip information is flight information, the first terminal may remind the user to depart two and a half hours in advance based on a flight takeoff time, or the first terminal may remind the user to depart based on a distance duration, or the first terminal may remind the user to depart based on the distance duration and the trip start time of the trip.

In a possible situation, the user may determine a departure time based on the departure reminding service. However, when the departure time is inaccurate, the user may depart too early or too late. For example, when the user travels, the user departs too early, which may cause the user to wait for a long time at the trip start position. Moreover, for some small airports, due to relatively short check-in and boarding deadlines, the user may depart earlier, or the users may choose an appropriate departure time based on past experience.

In view of this, embodiments of this application provide a trip prompting method and apparatus. The first terminal may obtain trip information. The first terminal may acquire a first duration associated with a trip start position. The trip information includes a trip start time and the trip start position. The first terminal may acquire, at a first time, a second duration required to arrive at the trip start position from a position of the first terminal. The first terminal calculates a first difference between the trip start time and a second time. The second time is a time after the first time passes the second duration. Therefore, when the first difference is less than or equal to the first duration, the first terminal may display, through a first interface, information for prompting departure. Since the first difference is less than or equal to the first duration and the first duration is learned in advance, the first user may not depart too early or too late when the first user departs from the first time.

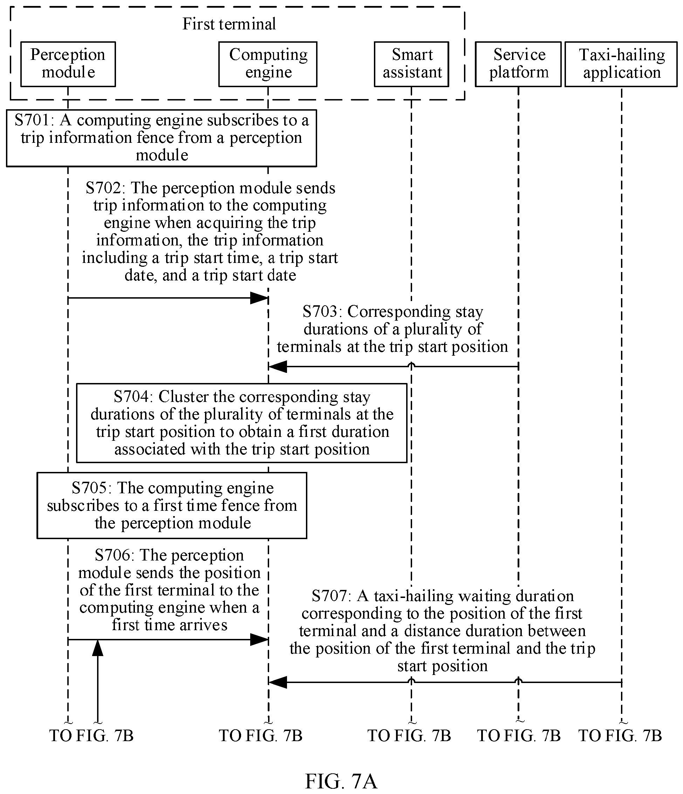

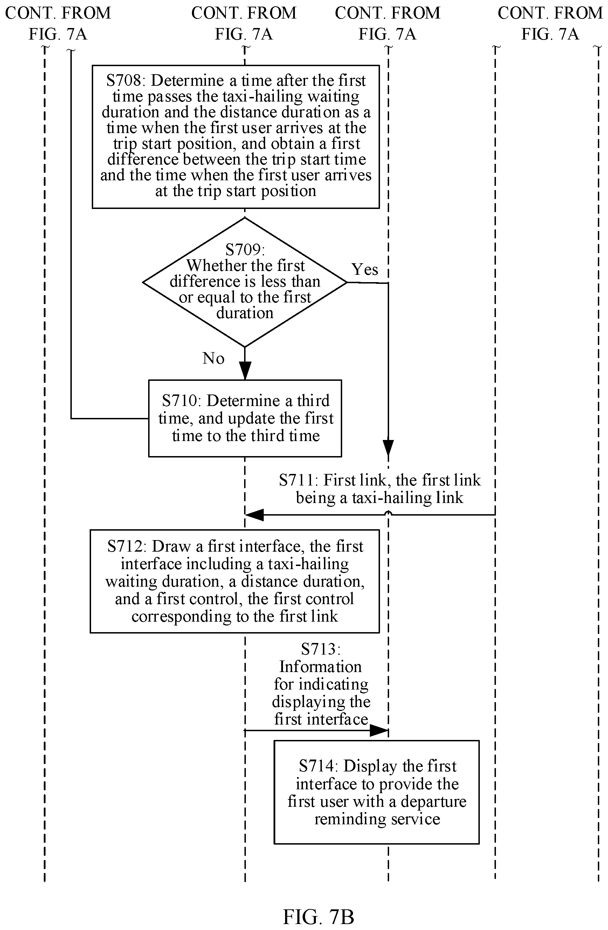

Exemplarily, FIG. 7A and FIG. 7B are schematic flowcharts of a trip prompting method according to an embodiment of this application. As shown in FIG. 7A and FIG. 7B, the method may include the following steps:
S701: A computing engine subscribes to a trip information fence from a perception module.

In this embodiment of this application, refer to the corresponding description of the content of S301 for content of S701. Details are not described herein again.

S702: The perception module sends trip information to the computing engine when the perception module acquires the trip information.

In this embodiment of this application, refer to the corresponding description of the content of S302 for content of S702. Referring to FIG. 3, the trip information may include a trip start position and a trip start time. For example, when the trip information is flight information, the trip start position refers to an aircraft takeoff position, and the trip start time refers to an aircraft takeoff time.

It may be understood that specific content of the trip information may be set according to an actual application requirement, which is not limited in this embodiment of this application.

S703: The computing engine acquires corresponding stay durations of a plurality of terminals at the trip start position from a service platform.

In this embodiment of this application, the computing engine may send, to the service platform, information for indicating acquiring the corresponding stay durations of the plurality of terminals at the trip start position. After the service platform receives the information, the service platform may send the corresponding stay durations of the plurality of terminals at the trip start position to the computing engine, so that the computing engine can acquire the corresponding stay durations of the plurality of terminals at the trip start position from the service platform.

S704: The computing engine clusters the corresponding stay durations of the plurality of terminals at the trip start position to obtain a first duration associated with the trip start position.

In this embodiment of this application, the computing engine clustering the corresponding stay durations of the plurality of terminals at the trip start position to obtain a first duration of the first terminal includes the following possible implementations:

In a first possible implementation, the computing engine clusters the corresponding stay durations of the plurality of terminals at the trip start position to obtain a plurality of first curves, the computing engine fits the plurality of first curves into a second curve, the computing engine calculates area ratios of the plurality of first curve to the second curve respectively, and the computing engine determines a duration corresponding to one of the plurality of first curves as the first duration when the area ratio of the one of the plurality of first curves to the second curve is maximum.

Any one of the first curves is a normal distribution curve, and both the second curve and the first curve may be understood as distribution curves corresponding to historical waiting durations. For example, the curve may be expressed

$$p(x) = \sum_{k=1}^{s} \pi_k N(x | \mu_k, \sigma_k)$$

by $p(x)$. $p(x)$ satisfies the following formula: , where s denotes a quantity of the first curves, $N(x|\mu_k, \sigma_k)$ denotes a $k^{th}$ first curve, $\pi_k$ denotes an area ratio of the $k^{th}$ first curve to the second curve, which is alternatively understood as that $\pi_k$ denotes a weight of the $k^{th}$ first curve, x denotes a waiting duration corresponding to the $k^{th}$ first curve, $\mu_k$ denotes a mean, and $\sigma_k$ denotes a variance.

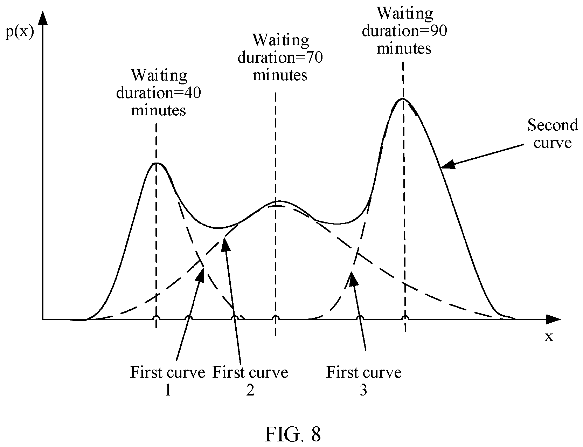

When the trip information is flight information, exemplarily, FIG. 8 is a schematic diagram of distribution curves of waiting durations according to an embodiment of this application. As shown in FIG. 8, the computing engine clusters the corresponding stay durations of the plurality of terminals at the trip start position, and three first curves corresponding to clustered durations may be obtained by calculation, which are a first curve 1, a first curve 2, and a first curve 3 respectively. A waiting duration corresponding to the first curve 1 is 40 minutes, a waiting duration corresponding to the first curve 2 is 70 minutes, and a waiting duration corresponding to the first curve 3 is 90 minutes. The computing engine may fit the first curve 1, the first curve 2, and the first curve 3 into a second curve. The computing engine calculates area ratios of the first curve 1, the first curve 2, and the first curve 3 to the second curve respectively. For example, when the area ratio of the first curve 2 to the second curve is maximum, the computing engine may determine the waiting duration corresponding to the first curve 2 as the first duration. That is, the first duration is 70 minutes.

In a second possible implementation, the computing engine clusters the corresponding stay durations of the plurality of terminals at the trip start position, the computing engine obtains a plurality of third durations, and the computing engine acquires, from the service platform, a plurality of historical durations that the first terminal historically stays at the trip start position. The computing engine clusters the plurality of historical durations to obtain an average duration of the plurality of historical durations. The computing engine determines one of the plurality of third durations as the first duration when an absolute value of a difference between the average duration and the one of the plurality of third durations is less than or equal to a first threshold.

It may be understood that the computing engine clusters the corresponding stay durations of the plurality of terminals at the trip start position, the computing engine may obtain a plurality of third durations after clustering, and the computing engine may also determine a maximum one of the plurality of third durations as the first duration.

Based on the content of S703 and S704, the service platform sends the corresponding stay durations of the plurality of terminals at the trip start position to the computing engine, so that the computing engine can obtain a first duration associated with the trip start position based on the corresponding stay durations of the plurality of terminals at the trip start position. It may be understood that the first duration is further associated with one or more of a type corresponding to the trip start position, a type corresponding to the trip start time, and a trip ticket type corresponding to the trip information. In this way, the computing engine acquires corresponding stay durations of a plurality of terminals at the trip start position from a service platform in a possible implementation as follows: the computing engine queries the service platform for information corresponding to the type corresponding to the trip start position, the type corresponding to the trip start time, and/or the trip ticket type corresponding to the trip information to obtain the corresponding stay durations of the plurality of terminals at the trip start position.

It may be understood that the first duration may also be associated with whether to be a usual place of residence, a time period type corresponding to the trip start time, and the like, which is not limited in this embodiment of this application.

In an example, when the trip information is flight information, the type corresponding to the trip start position may be understood as an airport type. The airport type may include a large airport or a small airport. The type corresponding to the trip start time may be understood as a flight takeoff time type. The flight takeoff time type may include a morning flight, an afternoon flight, or an evening flight. The time period type corresponding to the trip start time may be understood as a time period where the flight takeoff time is located, for determining whether the trip start time is a flight during peak hours. The trip ticket type corresponding to the trip information may be understood as an airline ticket type. The airline ticket type may include a domestic flight or an international flight.

Exemplarily, when the trip information is flight information, Table 4 shows information associated with the first duration. As shown in Table 4, the information may include whether a place of departure is a usual place of residence, a flight takeoff time period, a flight takeoff airport, an airline ticket type, and the like. In this way, the computing engine can durations corresponding to a plurality of terminals from the service platform based on the information shown in Table 4.

**Table 4**

| Place of departure | Flight takeoff time period | Flight takeoff airport | Airline ticket type | ... |
|---|---|---|---|---|
| Whether to be a usual place of residence | [6:30-7:00][...] | Airport A | Domestic/international | ... |

When the flight information is trip information, exemplarily, Table 5 shows waiting durations of a user A and a user B obtained by the computing engine. As shown in Table 5, the waiting duration may be 70 minutes when the place of departure of the user A is a usual place of residence. The waiting duration may be 90 minutes when the place of departure of the user A is a non-usual place of residence. The waiting duration may be 70 minutes when the flight of the user A is a morning peak flight, and so on. The waiting duration may be 40 minutes when the place of departure of the user B is a usual place of residence. The waiting duration may be 70 minutes when the place of departure of the user B is a non-usual place of residence. The waiting duration may be 40 minutes when the flight of the user B is a morning peak flight, and so on.

**Table 5**

| Waiting duration | Usual place of residence | Non-usual place of residence | Morning rush hour flights | ... |
|---|---|---|---|---|
| User A | 70 minutes | 90 minutes | 90 minutes | ... |
| User B | 40 minutes | 70 minutes | 40 minutes | |

It may be understood that a specific value of the waiting duration may be set according to an actual application requirement, which is not limited in this embodiment of this application.

Based on the content of S703 and S704, the computing engine clusters the corresponding stay durations of the plurality of terminals at the trip start position to obtain the first duration. It may be understood that the computing engine may also acquire the first duration from the service platform. The first duration is calculated by the service platform according to the corresponding stay durations of the plurality of terminals at the trip start position. For a specific implementation in which the service platform obtains the first duration, refer to the implementation in which the first terminal obtains the first duration. Details are not described herein again.

S705: The computing engine subscribes to a first time fence from the perception module.

S706: The perception module sends the position of the first terminal to the computing engine when a first time arrives.

In this embodiment of this application, the perception module may acquire the position of the first terminal through a GPS, and send the position of the first terminal to the computing engine. It may be understood that the position of the first terminal is a position where the first user is located.

S707: The computing engine acquires, from a taxi-hailing application, a taxi-hailing waiting duration corresponding to the position of the first terminal and a distance duration between the position of the first terminal and the trip start position.

In this embodiment of this application, referring to FIG. 2, the computing engine may acquire, from the taxi-hailing application, the taxi-hailing waiting duration corresponding to the position of the first terminal and the distance duration between the position of the first terminal and the trip start position through a taxi-hailing node. For example, the computing engine may send, through the taxi-hailing node to the taxi-hailing application, information for indicating acquiring the taxi-hailing waiting duration corresponding to the position of the first terminal and the distance duration between the position of the first terminal and the trip start position. After the taxi-hailing application receives the information, the taxi-hailing application may send, to the computing engine, the taxi-hailing waiting duration corresponding to the position of the first terminal and the distance duration between the position of the first terminal and the trip start position, so that the computing engine can acquire, from the taxi-hailing application, the taxi-hailing waiting duration corresponding to the position of the first terminal and the distance duration between the position of the first terminal and the trip start position.

S708: The computing engine determines a time after the first time passes the taxi-hailing waiting duration and the distance duration as a time when the first user arrives at the trip start position, and obtains a first difference between the trip start time and the time when the first user arrives at the trip start position.

It should be noted that the trip start time is a trip start time on the trip start date. The time may be called a departure time, and a difference between the first time and the departure time is less than a preset value. The taxi-hailing waiting duration may be called a fourth duration, and the distance duration may be called a fifth duration. The fifth duration may be understood as a distance duration required by the first terminal from the position of the first terminal to the trip start position at the first time. A sum of the taxi-hailing waiting duration and the distance duration may be understood as a second duration required to arrive at the trip start position from the position of the first terminal. The time when the first user arrives at the trip start position may be understood as a time after the first time passes the second duration. The time may also be called a second time. The first difference may also be understood as a difference between the trip start time and the second time.

S709: The computing engine determines whether the first difference is less than or equal to the first duration.

In this embodiment of this application, when the computing engine determines that the first difference is greater than the first duration, the computing engine performs S710. When the computing engine determines that the first difference is less than or equal to the first duration, the computing engine performs S711.

S710: The computing engine determines a third time, and updates the first time to the third time.

In this embodiment of this application, after the computing engine performs S710, the computing engine may continue S706 to S709. The computing engine continuing S706 to S709 may be understood as that the computing engine redetermines, at the third time, whether information for prompting departure is displayed on the first interface. The third time is later than the first time.

The computing engine may determine the third time according to the difference between the first difference and the first duration and the first time. The third time may satisfy the following formula: the third time=the first time+(the first difference-the first duration)/2. For example, the second time is 12:00 and the first difference is 2 hours if the trip start time is 14:00, the first time is 10:00, and the second duration is 2 hours. If the first duration is 1 hour, the difference between the first difference and the first duration is 1 hour. Therefore, the third time may be 10:30.

It may be understood that a specific implementation in which the computing engine determines the third time and a specific value of the third time may be set according to an actual application requirement, which are not limited in this embodiment of this application.

S711: The computing engine acquires a first link from the service platform.

S712: The computing engine draws a first interface.

In this embodiment of this application, the computing engine may send, to the service platform, information for indicating acquiring the first link. After the service platform receives the information, the service platform may send the first link to the computing engine. The first link may be a taxi-hailing link. The first interface may include a taxi-hailing waiting duration, a distance duration, and a first control. The first control corresponds to the first link. The first control may be a taxi now control.

It may be understood that the computing engine may also determine a congestion condition of traffic according to the distance duration. For example, when the distance duration is greater than a second threshold, the computing engine may determine that the traffic is heavily congested. When the distance duration is less than or equal to the second threshold and the distance duration is greater than a third threshold, the computing engine may determine that the traffic is relatively congested. When the distance duration is less than or equal to the third threshold, the computing engine may determine that the traffic is not congested. The computing engine may draw information of severe traffic congestion on the first interface, so that the first user can know the congestion condition of the traffic.

The second threshold may be 90 minutes, and the third threshold may be 40 minutes. A specific value of the second threshold and a specific value of the third threshold may be set according to an actual application requirement, which are not limited in this embodiment of this application.

S713: The computing engine sends, to a smart assistant, information for indicating displaying the first interface.

S714: The smart assistant displays the first interface to provide the first user with a departure reminding service.

In this embodiment of this application, when the smart assistant displays the first interface to provide the first user with the departure reminding service, the first user can know the departure time when seeing the interface, so that the first user may not arrive at the trip start position too early or too late based on the time.

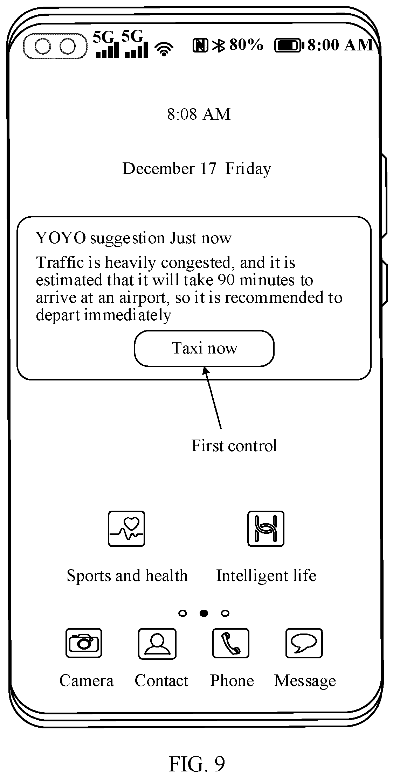

When the trip information is flight information and the smart assistant is YOYO Suggestion, exemplarily, FIG. 9 is a schematic diagram of a first terminal displaying a first interface according to an embodiment of this application. The interface shown in FIG. 9 is the first interface. The first user may see the information of severe traffic congestion and the distance duration to the airport. The first interface further includes a first control. The first control is a taxi now control. When the first user clicks the taxi now control, the first terminal may display a taxi-hailing interface, and the first user may select a vehicle going to the airport from the taxi-hailing interface. An interface after the first user clicks the taxi now control is not shown in the figure.

In the embodiment shown in FIG. 7B, it may be understood that the first terminal may close the first interface when the position of the first terminal indicates that the first user has arrived at the trip start position.

In the embodiment shown in FIG. 7B, it may be understood that the first terminal may send prompt information to a second terminal for the second terminal to prompt, according to the prompt information, the user to depart. For example, when the second terminal is a headset, the headset may broadcast departure information. A manner in which the first terminal and the second terminal remind the departure information may be the manner described in Table 3.

It may be understood that, when the trip information is flight information, the first terminal may remind the first user in time to depart based on the taxi-hailing waiting duration, the distance duration, and the check-in state, so as to prevent missing of the flight, which is alternatively understood as that the first terminal reminds the first user in time to depart by calculating a congestion time length of congestion of the first user going to the airport.

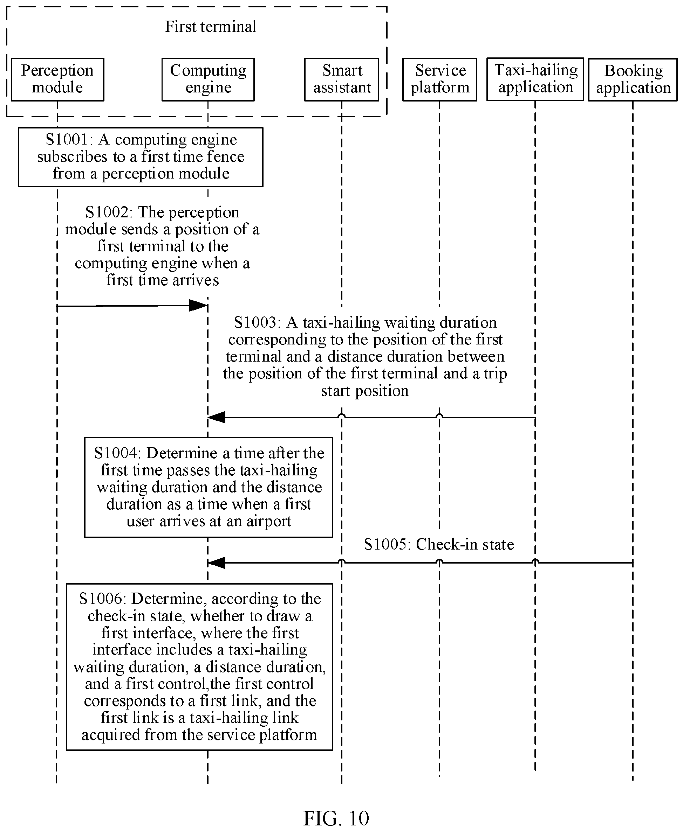

Exemplarily, FIG. 10 is a schematic flowchart of a trip prompting method according to an embodiment of this application. As shown in FIG. 10, the method may include the following steps:

S1001: A computing engine subscribes to a first time fence from a perception module.
S1002: The perception module sends a position of a first terminal to the computing engine when a first time arrives.
S1003: The computing engine acquires, from a taxi-hailing application, a taxi-hailing waiting duration corresponding to the position of the first terminal and a distance duration between the position of the first terminal and a trip start position.

In this embodiment of this application, the computing engine may send, to the taxi-hailing application, information for indicating acquiring the taxi-hailing waiting duration corresponding to the position of the first terminal and the distance duration between the position of the first terminal and the trip start position. After the taxi-hailing application receives the information, the taxi-hailing application may send, to the computing engine, the taxi-hailing waiting duration corresponding to the position of the first terminal and the distance duration between the position of the first terminal and the trip start position, so that the computing engine can acquire, from the taxi-hailing application, the taxi-hailing waiting duration corresponding to the position of the first terminal and the distance duration between the position of the first terminal and the trip start position.

S1004: The computing engine determines a time after the first time passes the taxi-hailing waiting duration and the distance duration as a time when a first user arrives at an airport.

S1005: The computing engine acquires a check-in state from a booking application.

In this embodiment of this application, the computing engine may send, to the booking application, information for indicating acquiring a check-in state corresponding to a trip identifier, a trip date, and a trip start time. After the booking application receives the information, the booking application may send the check-in state corresponding to the trip identifier, the trip date, and the trip start time to the computing engine, so that the computing engine can acquire the check-in state from the booking application.

S1006: The computing engine determines, according to the check-in state, whether to draw a first interface.

It should be noted that in this embodiment of this application, the difference between the first time and the trip start time on the trip start date is less than a preset value, the taxi-hailing waiting duration may be called a second duration, and the distance duration may be called a third duration. The third duration may be understood as a distance duration required by the first terminal from the position of the first terminal to the trip start position at the first time. A sum of the second duration and the third duration may be called the first duration. The time when the first user arrives at the airport may be called a third time. The third time may be understood as a time after the first time passes the first duration. The first interface includes a taxi-hailing waiting duration, a distance duration, and a first control. The first control corresponds to a first link. The first link is a taxi-hailing link acquired by the computing engine from the service platform.

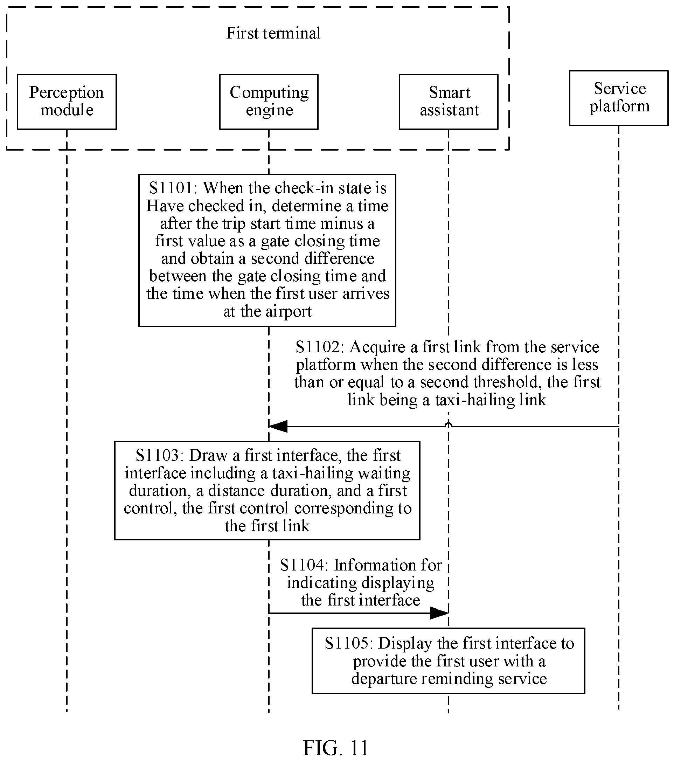

In combination with the content shown in FIG. 10, exemplarily, FIG. 11 is a schematic flowchart of a trip prompting method according to an embodiment of this application. This embodiment of this application is a further description of S1006. As shown in FIG. 11, the method may include the following steps:

S1101: When the check-in state is Have checked in, the computing engine determines a time after the trip start time minus a first value as a gate closing time and obtains a second difference between the gate closing time and the time when the first user arrives at the airport. For example, when the trip start time is 14:00 and the first value is 15 minutes, the gate closing time may be 13:45.
S1102: The computing engine acquires a first link from the service platform when the second difference is less than or equal to a second threshold.
S1103: The computing engine draws the first interface.
S1104: The computing engine sends, to a smart assistant, information for indicating displaying the first interface.
S1105: The smart assistant displays the first interface to provide the first user with a departure reminding service.

In this embodiment of this application, the gate closing time may be called a second time. The second time is later than the third time. It should be noted that when the second difference is greater than the second threshold, the computing engine may determine a fourth time and update the first time to the fourth time. The fourth time may satisfy the following formula: the fourth time=the first time+(the second difference-the second threshold)/2. After the first terminal performs S1105 through the smart assistant, the first terminal may continue S1002 to S1005 through the computing engine.

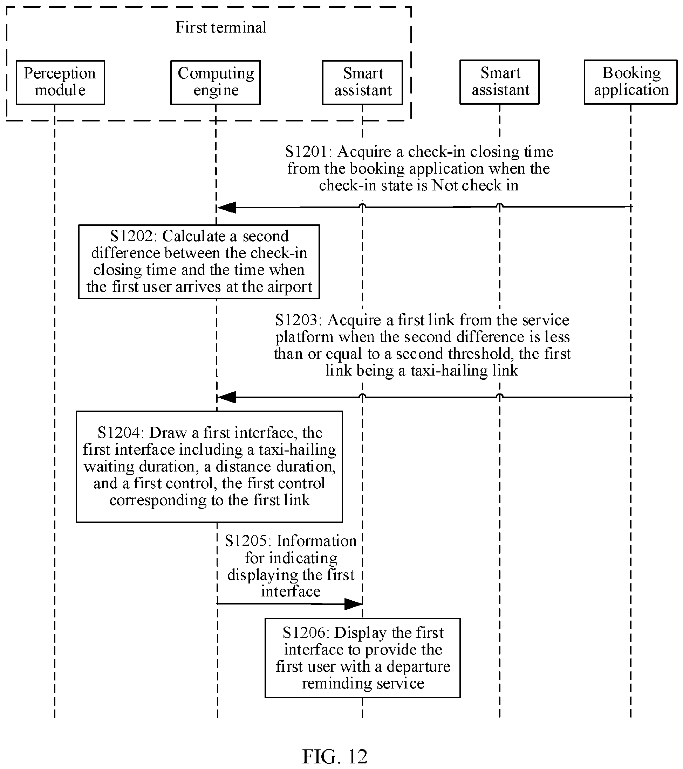

In combination with the content shown in FIG. 10, exemplarily, FIG. 12 is a schematic flowchart of a trip prompting method according to an embodiment of this application. The booking application in this application may refer to a flight application. This embodiment of this application is a further description of S1006. As shown in FIG. 12, the method may include the following steps:

S1201: The computing engine acquires a check-in closing time from the booking application when the check-in state is Not check in.

S1202: The computing engine calculates a second difference between the check-in closing time and the time when the first user arrives at the airport.

S1203: The computing engine acquires a first link from the service platform when the second difference is less than or equal to a second threshold.

S1204: The computing engine draws the first interface.

S1205: The computing engine sends, to a smart assistant, information for indicating displaying the first interface.

S1206: The smart assistant displays the first interface to provide the first user with a departure reminding service.

It should be noted that the check-in closing time may be called a second time. The second time is later than the third time. When the second difference is greater than the second threshold, the computing engine may determine a fourth time and update the first time to the fourth time. The fourth time satisfies the following formula: the fourth time=the first time+(the second difference-the second threshold)/2. After the first terminal performs S1206 through the smart assistant, the first terminal may continue S1002 to S1005 through the computing engine.

In combination with the content shown in FIG. 10 to FIG. 12, it may be understood that the first terminal may accurately calculate the congestion time length of congestion of the first user going to the airport, which is combined with the check-in state of the first user, so as to prompt, in a more timely manner, the first user to depart.

In the embodiment shown in FIG. 11 or FIG. 12, it may be understood that the first terminal may close the first interface when the position of the first terminal indicates that the first user has arrived at the trip start position.

In the embodiment shown in FIG. 11 or FIG. 12, it may be understood that the first terminal may send prompt information to a second terminal for the second terminal to prompt, according to the prompt information, the user to depart. For example, when the second terminal is a headset, the headset may broadcast departure prompt information. A manner in which the first terminal and the second terminal remind the departure information may be the manner described in Table 3.

It should be noted that in combination with the content described above, it may be understood that the method in this embodiment of this application is not limited to a train travel scenario or a flight travel scenario, and may also include a ship travel scenario and the like. When the travel scenario is another travel scenario, the first user may be provided with a required trip service through the method in this embodiment of this application.

The foregoing describes the trip prompting method in the embodiments of this application. The following describes an apparatus for performing the trip prompting method provided in the embodiments of this application. A person skilled in the art may understand that the method and the apparatus may be mutually combined and referenced. The trip prompting apparatus provided in the embodiments of this application may perform the steps in the trip prompting method.

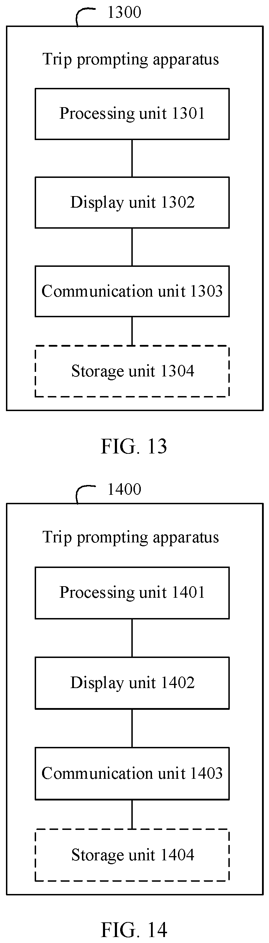

Exemplarily, FIG. 13 is a schematic structural diagram of a trip prompting apparatus according to an embodiment of this application. As shown in FIG. 13, the apparatus 1300 may be a first terminal or a chip or system-on-chip applied to the first terminal. The apparatus 1300 includes: a processing unit 1301, a display unit 1302, and a communication unit 1303. The processing unit 1301 is configured to support the trip prompting apparatus to perform an information processing step. The display unit 1302 is configured to support the trip prompting apparatus to perform a displaying step. The communication unit 1303 is configured to support the trip prompting apparatus to perform an information receiving or sending step.

Exemplarily, the processing unit is configured to acquire trip information, the trip information including a trip start time, a trip start position, and a trip start date. The processing unit is further configured to acquire a first duration associated with the trip start position. The processing unit is further configured to acquire, at a first time, a second duration required to arrive at the trip start position from a position of the first terminal. The processing unit is further configured to calculate a first difference between a departure time and a second time, the second time being a time after the first time passes the second duration. The departure time being the trip start time on the trip start date. The display unit is configured to display a first interface when the first difference is less than or equal to the first duration, the first interface including information for prompting departure.

In a possible implementation, a difference between the first time and the departure time is less than a preset value, and the processing unit is further configured to: when the first difference is greater than the first duration, redetermine, at a third time, whether the information for prompting departure is displayed on the first interface. The third time is later than the first time.

In a possible implementation, the third time satisfies the following formula: the third time=the first time+(the first difference-the first duration)/2.

In a possible implementation, the processing unit is specifically configured to: acquire corresponding stay durations of a plurality of terminals at the trip start position from a service platform; where the service platform is configured to serve the first terminal; cluster the corresponding stay durations of the plurality of terminals at the trip start position to obtain a plurality of first curves; fit the plurality of first curves into a second curve; calculate area ratios of the plurality of first curve to the second curve respectively; and determine a duration corresponding to one of the plurality of first curves as the first duration when the area ratio of the one of the plurality of first curves to the second curve is maximum.

In a possible implementation, the processing unit is specifically configured to: acquire corresponding stay durations of a plurality of terminals at the trip start position from a service platform; where the service platform is configured to serve the first terminal; cluster the corresponding stay durations of the plurality of terminals at the trip start position to obtain a plurality of third durations; acquire a plurality of historical durations that the first terminal historically stays at the trip start position; obtain an average duration of the plurality of historical durations; and determine one of the plurality of third durations as the first duration when an absolute value of a difference between the average duration and the one of the plurality of third durations is less than or equal to a first threshold.

In a possible implementation, the first duration is further associated with one or more of a type corresponding to the trip start position, a type corresponding to the trip start time, and a trip ticket type corresponding to the trip information, and the processing unit is specifically configured to: query the service platform for information corresponding to the type corresponding to the trip start position, the type corresponding to the trip start time, and/or the trip ticket type corresponding to the trip information to obtain the corresponding stay durations of the plurality of terminals at the trip start position.

In a possible implementation, when the trip information is flight information, the type corresponding to the trip start position includes a large airport or a small airport, the type corresponding to the trip start time includes a morning flight, an afternoon flight, or an evening flight, and the trip ticket type corresponding to the trip information includes a domestic flight or an international flight.

In a possible implementation, the processing unit is specifically configured to: acquire the first duration from a service platform; the service platform being configured to serve the first terminal, and the first duration being calculated by the service platform according to corresponding stay durations of a plurality of terminals at the trip start position.

In a possible implementation, the processing unit is specifically configured to: acquire a fourth duration and a fifth duration from a taxi-hailing application at the first time; where the fourth duration is a taxi-hailing waiting duration, and the fifth duration is a distance duration required by the first terminal from the position of the first terminal to the trip start position at the first time; and calculate a sum of the fourth duration and the fifth duration to obtain the second duration.

In a possible implementation, the communication unit is configured to: send prompt information to a second terminal for the second terminal to prompt, according to the prompt information, the user to depart.

In a possible embodiment, the trip prompting apparatus may further include: a storage unit 1304. The processing unit 1301, the display unit 1302, the communication unit 1303, and the storage unit 1304 are connected by using a communication bus.

The storage unit 1304 may include one or more memories, and the memory may be one or more devices or components in a circuit that are used to store a program or data.

The storage unit 1304 may exist independently, and is connected to the processing unit 1301 of the trip prompting apparatus by using a communication bus. The storage unit 1304 may alternatively be integrated with the processing unit 1301.

The trip prompting apparatus may be used in a trip prompting device, a circuit, a hardware component, or a chip.

Exemplarily, FIG. 14 is a schematic structural diagram of a trip prompting apparatus according to an embodiment of this application. As shown in FIG. 14, the apparatus 1400 may be a first terminal or a chip or system-on-chip applied to the first terminal. The apparatus 1400 includes: a processing unit 1401, a display unit 1402, and a communication unit 1403. The processing unit 1401 is configured to support the trip prompting apparatus to perform an information processing step. The display unit 1402 is configured to support the trip prompting apparatus to perform a display step. The communication unit 1403 is configured to support the trip prompting apparatus to perform an information receiving or sending step.

Exemplarily, the processing unit is configured to acquire flight information; where the flight information includes a trip start position, a trip identifier, a trip start time, and a trip start date; the processing unit is further configured to acquire, at a first time, a first duration required to arrive at the trip start position from a position of the first terminal; the processing unit is further configured to acquire second time; the second time being associated with a check-in state, the check-in state being acquired by the first terminal at the first time from a booking application based on the trip identifier, the trip start time, and the trip start date; the processing unit is further configured to calculate a second difference between the second time and a third time; the third time being a time after the first time passes the first duration, the second time being later than the third time; and the display unit is configured to display a first interface when the second difference is less than or equal to a second threshold, the first interface including information for prompting departure.

In a possible implementation, a difference between the first time and the trip start time on the trip start date is less than a preset value, and the processing unit is further configured to: when the second difference is greater than the second threshold, redetermine, at a fourth time, whether the information for prompting departure is displayed on the first interface; the fourth time being later than the first time.

In a possible implementation, the fourth time satisfies the following formula: the fourth time=the first time+(the second difference-the second threshold)/2.

In a possible implementation, the processing unit is specifically configured to: determine, when the check-in state is Not check in, a check-in closing time acquired from the booking application as the second time.

In a possible implementation, the processing unit is specifically configured to: determine, when the check-in state is Have checked in, a gate closing time acquired from the booking application as the second time; the gate closing time being a time after the departure time minus a first value, and the departure time being the trip start time on the trip start date.

In a possible implementation, the processing unit is specifically configured to: acquire a second duration and a third duration from a taxi-hailing application at the first time; the second duration being a taxi-hailing waiting duration, and the third duration being a distance duration required by the first terminal from the position of the first terminal to the trip start position at the first time; and calculate a sum of the second duration and the third duration to obtain the first duration.

In a possible implementation, the communication unit is configured to: send prompt information to a second terminal for the second terminal to prompt, according to the prompt information, the user to depart.

In a possible embodiment, the trip prompting apparatus may further include: a storage unit 1404 . The processing unit 1401, the display unit 1402, the communication unit 1403, and the storage unit 1404 are connected by using a communication bus.

The storage unit 1404 may include one or more memories, and the memory may be one or more devices or components in a circuit that are used to store a program or data.

The storage unit 1404 may exist independently, and is connected to the processing unit 1401 of the trip prompting apparatus by using a communication bus. The storage unit 1404 may alternatively be integrated with the processing unit 1401.

The trip prompting apparatus may be used in a trip prompting device, a circuit, a hardware component, or a chip.

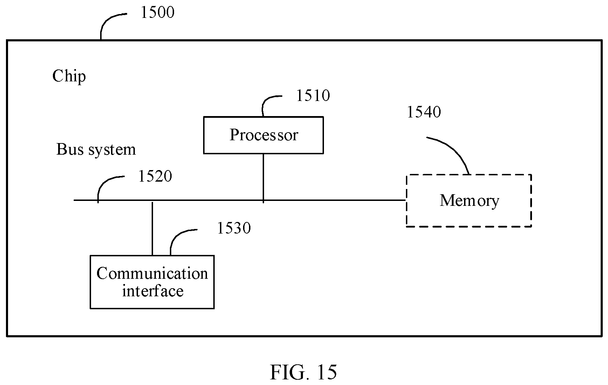

Exemplarily, FIG. 15 is a schematic structural diagram of a chip according to an embodiment of this application. A chip 1500 includes one or more than two (including two) processors 1510 and a communication interface 1530.

In some implementations, the memory 1540 stores the following element: an executable module, or a data structure, or a subset thereof, or an extension set thereof.

In this embodiment of this application, the memory 1540 may include a read-only memory and a random access memory, and provides instructions and data to the processor 1510. A part of the memory 1540 may further include a non-volatile random access memory (non-volatile random access memory, NVRAM).

In this embodiment of this application, the memory 1540 , the communication interface 1530, and the memory 1540 are coupled together by a bus system 1520. In addition to a data bus, the bus system 1520 may further include a power bus, a control bus, a status signal bus, and the like. For ease of representation, all types of buses in FIG. 15 are marked as the bus system 1520.

The method described above in this embodiment of this application may be applied to the processor 1510 or implemented by the processor 1510. The processor 1510 may be an integrated circuit chip, having a capability of processing a signal. In an implementation process, steps in the foregoing methods can be implemented by using a hardware integrated logical circuit in the processor 1510, or by using instructions in a form of software. The above processor 1510 may be a general purpose processor, (for example, a microprocessor or a conventional processor), a digital signal processing (digital signal processing, DSP), an application specific integrated circuit (application specific integrated circuit, ASIC), a field-programmable gate array (field-programmable gate array, FPGA), another programmable logic device, a discrete gate, a transistor logic device, or a discrete hardware component. The processor 1510 may implement or perform the methods, steps, and logical block diagrams disclosed in the embodiments of the present invention.

The steps of the methods disclosed with reference to the embodiments of this application may be directly performed and completed by using a hardware decoding processor, or may be performed and completed by using a combination of hardware and software modules in the decoding processor. The software module may be located in a mature storage medium in the field such as a random access memory, a read-only memory, a programmable read-only memory, an electrically erasable programmable memory (electrically erasable programmable read only memory, EEPROM), or a register. The storage medium is located in the memory 1540, and the processor 1510 reads information in the memory 1540 and completes the steps in the foregoing methods in combination with hardware of the processor.

In the foregoing embodiment, the instructions executed by the processor stored in the memory may be implemented in the form of a computer program product. The computer program product may be pre-written in the memory, or may be downloaded and installed in the memory in a form of software.

The computer program product includes one or more computer instructions. When the computer program instructions are loaded and executed on the computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, including one or more usable media. The usable medium may include a magnetic medium (for example, a floppy disk, a hard disk, or a magnetic tape), an optical medium (for example, a digital versatile disc (digital versatile disc, DVD)), a semi-conductive medium (for example, a solid state disk (solid state disk, SSD)), or the like.

An embodiment of this application further provides a computer-readable storage medium. All or some of methods described in the foregoing embodiments may be implemented by using software, hardware, firmware, or any combination thereof. The computer-readable medium may include a computer storage medium and a communication medium, and may further include any medium that can transmit a computer program from one place to another. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. Any connection line may also be appropriately referred to as a computer readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc (CD), a laser disc, an optical disc, a digital versatile disc (digital versatile disc, DVD), a floppy disk, and a blue ray disc. The magnetic disk generally reproduces data in a magnetic manner, and the optical disc reproduces data optically by using laser.

The foregoing combination should also be included in the scope of the computer-readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A trip prompting method, applied to a first terminal, the method comprising:

    1) acquiring (S702), by the first terminal, trip information, the trip information comprising a trip start time, a trip start position, and a trip start date;
    2) acquiring (S703, S704), by the first terminal, a first duration associated with the trip start position;
    3) acquiring (S708), by the first terminal at a first time, a second duration required to arrive at the trip start position from a position of the first terminal;
    4) calculating (S708), by the first terminal, a first difference between a departure time and a second time, the second time being a time after the first time passes the second duration; the departure time being the trip start time on the trip start date; and
    5) displaying (S714), by the first terminal, a first interface when the first difference is less than or equal to the first duration, the first interface comprising information for prompting departure; and
    6) updating (S710), by the first terminal at a third time, the first time to the third time and re-performing the steps 2) to 5) when the first difference is greater than the first duration; the third time being later than the first time; wherein the step 2) comprises:

        acquiring (S703), by the first terminal, corresponding stay durations of a plurality of terminals at the trip start position from a service platform; wherein the service platform is configured to serve the first terminal;
        clustering (S704), by the first terminal, the corresponding stay durations of the plurality of terminals at the trip start position to obtain a plurality of first curves;
        fitting, by the first terminal, the plurality of first curves into a second curve;
        calculating, by the first terminal, area ratios of the plurality of first curve to the second curve respectively; and
        determining, by the first terminal, a duration corresponding to one of the plurality of first curves as the first duration when the area ratio of the one of the plurality of first curves to the second curve is maximum.

**2.** The method according to claim 1, wherein the third time satisfies the following formula:
the third time=the first time+(the first difference-the first duration)/2.

**3.** The method according to claim 1 or 2, wherein the first duration is further associated with one or more of a type corresponding to the trip start position, a type corresponding to the trip start time, and a trip ticket type corresponding to the trip information, and the acquiring (S703), by the first terminal, corresponding stay durations of the plurality of terminals at the trip start position from the service platform comprises:
querying, by the first terminal, the service platform for information corresponding to the type corresponding to the trip start position, the type corresponding to the trip start time, and/or the trip ticket type corresponding to the trip information to obtain the corresponding stay durations of the plurality of terminals at the trip start position.

**4.** The method according to claim 3, wherein when the trip information is flight information, the type corresponding to the trip start position comprises a large airport or a small airport, the type corresponding to the trip start time comprises a morning flight, an afternoon flight, or an evening flight, and the trip ticket type corresponding to the trip information comprises a domestic flight or an international flight.

**5.** An electronic device (100), comprising a processor (110) and a memory (121), the memory (121) being configured to store code instructions; and when the processor (110) executes the code instructions, the electronic device (100) performs the method according to any one of claims 1 to 4.

**6.** A computer-readable storage medium, wherein the computer-readable storage medium stores instructions, and the instructions, when executed, cause an electronic device (100) to perform the method according to any one of claims 1 to 4.

**Patentansprüche**

**1.** Verfahren zur Auslösung einer Reise, angewandt auf ein erstes Endgerät, wobei das Verfahren Folgendes umfasst:

1) Erfassen (S702) von Reiseinformationen durch das erste Endgerät, wobei die Reiseinformationen eine Abfahrtszeit, einen Startort der Reise und ein Startdatum der Reise umfassen;
2) Erfassen (S703, S704) einer ersten Dauer durch das erste Endgerät, wobei die erste Dauer dem Startort der Reise zugeordnet ist;
3) Erfassen (S708) einer zweiten Dauer durch das erste Endgerät zu einem ersten Zeitpunkt, wobei die zweite Dauer erforderlich ist, um vom Standort des ersten Endgeräts zum Startort der Reise zu gelangen;
4) Berechnen (S708) einer ersten Differenz durch das erste Endgerät zwischen einer Abfahrtszeit und einer zweiten Zeit, wobei die zweite Zeit den Zeitpunkt darstellt, der nach Ablauf der zweiten Dauer nach dem ersten Zeitpunkt liegt; die Abfahrtszeit ist die Abfahrtszeit der Reise am Startdatum; und
5) Anzeigen (S714) einer ersten Oberfläche durch das erste Endgerät, wenn die erste Differenz kleiner oder gleich der ersten Dauer ist, wobei die erste Oberfläche Informationen enthält, welche zum Start der Reise auffordern; und
6) Aktualisieren (S710) der ersten Zeit auf eine dritte Zeit durch das erste Endgerät zu einem dritten Zeitpunkt und erneutes Ausführen der Schritte 2) bis 5), wenn die erste Differenz größer als die erste Dauer ist; wobei die dritte Zeit später als die erste Zeit ist; wobei Schritt 2) Folgendes umfasst:

Erfassen (S703) der entsprechenden Aufenthaltsdauern mehrerer Endgeräte am Startort der Reise von einer Serviceplattform durch das erste Endgerät; wobei die Serviceplattform dafür konfiguriert ist, das erste Endgerät zu bedienen;
Gruppieren (S704) der entsprechenden Aufenthaltsdauern der mehreren Endgeräte am Startort der Reise durch das erste Endgerät, um eine Vielzahl von ersten Kurven zu erhalten;
Anpassen der Vielzahl von ersten Kurven in eine zweite Kurve durch das erste Endgerät;
Berechnen der Flächenverhältnisse der Vielzahl von ersten Kurven zu der zweiten Kurve durch das erste Endgerät jeweils; und
Bestimmen einer Dauer, die einer der Vielzahl von ersten Kurven entspricht, als die erste Dauer durch das erste Endgerät, wenn das Flächenverhältnis dieser einen ersten Kurve zur zweiten Kurve maximal ist.

**2.** Verfahren nach Anspruch 1, wobei die dritte Zeit die folgende Formel erfüllt:

$$\text{die dritte Zeit} = \text{die erste Zeit} + (\text{die erste Differenz} - \text{die erste Dauer})/2.$$

**3.** Verfahren nach Anspruch 1 oder 2, wobei die erste Dauer weiterhin mit einem oder mehreren der folgenden Typen verknüpft ist: einem Typ entsprechend der Startposition der Reise, einem Typ entsprechend der Startzeit der Reise und einem Tickettyp entsprechend den Reiseinformationen, und das Erfassen (S703) durch das erste Terminal der entsprechenden Aufenthaltsdauern der Vielzahl von Terminals an der Startposition der Reise von der Serviceplattform umfasst:
Abfrage, durch das erste Terminal, der Serviceplattform nach Informationen, die dem Typ der Startposition der Reise, dem Typ der Startzeit der Reise und/oder dem Tickettyp entsprechend den Reiseinformationen entsprechen, um die entsprechenden Aufenthaltsdauern der Vielzahl von Terminals an der Startposition der Reise zu erhalten.

**4.** Verfahren nach Anspruch 3, wobei, wenn die Reiseinformation Fluginformation ist, der Typ der Startposition der Reise einen großen Flughafen oder einen kleinen Flughafen umfasst, der Typ der Startzeit der Reise einen Morgenflug, einen Nachmittagsflug oder einen Abendflug umfasst, und der Tickettyp entsprechend den Reiseinformationen einen Inlandsflug oder einen internationalen Flug umfasst.

**5.** Elektronisches Gerät (100), umfassend einen Prozessor (110) und einen Speicher (121), wobei der Speicher (121) dazu konfiguriert ist, Code-Anweisungen zu speichern, und wobei, wenn der Prozessor (110) die Code-Anweisungen ausführt, das elektronische Gerät (100) das Verfahren nach einem der Ansprüche 1 bis 4 ausführt.

**6.** Computerlesbares Speichermedium, wobei das computerlesbare Speichermedium Anweisungen speichert und die Anweisungen, wenn sie ausgeführt werden, dazu führen, dass ein elektronisches Gerät (100) das Verfahren nach einem der Ansprüche 1 bis 4 ausführt.

**Revendications**

**1.** Procédé de déclenchement de trajet, appliqué à un premier terminal, le procédé comprenant :

1) acquisition (S702), par le premier terminal, d'informations de trajet, les informations de trajet comprenant une heure de début de trajet, une position de début de trajet et une date de début de trajet ;
2) acquisition (S703, S704), par le premier terminal, d'une première durée associée à la position de début de trajet ;
3) acquisition (S708), par le premier terminal à un premier instant, d'une seconde durée nécessaire pour arriver à la position de début de trajet à partir de la position du premier terminal ;
4) calcul (S708), par le premier terminal, d'une première différence entre une heure de départ et un second instant, le second instant étant un instant après que le premier instant passe la seconde durée ; l'heure de départ étant l'heure de début du trajet à la date de début du trajet ; et
5) affichage (S714), par le premier terminal, d'une première interface lorsque la première différence est inférieure ou égale à la première durée, la première interface comprenant des informations pour inciter au départ ; et
6) mise à jour (S710), par le premier terminal à un troisième instant, du premier instant en le remplaçant par le troisième instant et réexécution des étapes 2) à 5) lorsque la première différence est supérieure à la première durée ; le troisième instant étant postérieur au premier instant ; l'étape 2) comprenant :

acquisition (S703), par le premier terminal, des durées de séjour correspondantes d'une pluralité de terminaux à la position de début du trajet à partir d'une plateforme de service ; la plateforme de service étant configurée pour servir le premier terminal ;
regroupement (S704), par le premier terminal, des durées de séjour correspondantes de la pluralité de terminaux à la position de début de trajet afin d'obtenir une pluralité de premières courbes ;
ajustement, par le premier terminal, de la pluralité de premières courbes à une seconde courbe ;
calcul, par le premier terminal, des rapports de surfaces de la pluralité de premières courbes par rapport à la seconde courbe respectivement ; et
détermination, par le premier terminal, d'une durée correspondant à l'une de la pluralité de premières courbes comme étant la première durée lorsque le rapport de surface de l'une des premières courbes à la seconde courbe est maximal.

**2.** Procédé selon la revendication 1, dans lequel le troisième instant satisfait la formule suivante :

le troisième instant = le premier instant + (la première différence - la première durée)/2.

3. Le procédé selon la revendication 1 ou 2, dans lequel la première durée est en outre associée à un ou plusieurs des éléments suivants : un type correspondant à la position de départ du trajet, un type correspondant à l'heure de départ du trajet et un type de billet de trajet correspondant aux informations de trajet, et l'acquisition (S703), par le premier terminal, des durées de séjour correspondantes de la pluralité de terminaux à la position de départ du trajet auprès de la plateforme de service comprend :
l'interrogation, par le premier terminal, de la plateforme de service pour des informations correspondant au type lié à la position de départ du trajet, au type correspondant à l'heure de départ du trajet et/ou au type de billet de trajet correspondant aux informations de trajet afin d'obtenir les durées de séjour correspondantes de la pluralité de terminaux à la position de départ du trajet.

4. Le procédé selon la revendication 3, dans lequel, lorsque les informations de trajet sont des informations de vol, le type correspondant à la position de départ du trajet comprend un grand aéroport ou un petit aéroport, le type correspondant à l'heure de départ du trajet comprend un vol matinal, un vol de l'après-midi ou un vol du soir, et le type de billet de trajet correspondant aux informations de trajet comprend un vol intérieur ou un vol international.

5. Un dispositif électronique (100), comprenant un processeur (110) et une mémoire (121), la mémoire (121) étant configurée pour stocker des instructions de code ; et lorsque le processeur (110) exécute les instructions de code, le dispositif électronique (100) exécute le procédé selon l'une quelconque des revendications 1 à 4.

6. Un support de stockage lisible par ordinateur, ledit support de stockage contenant des instructions, lesquelles, lorsqu'elles sont exécutées, amènent un dispositif électronique (100) à exécuter le procédé selon l'une quelconque des revendications 1 à 4.

First terminal 100

Antenna 1                                    Antenna 2

Mobile communication module
2G/3G/4G/5G
[150]

Wireless communication module
BT/WLAN/GNSS/NFC/IR/FM
[160]

Display screen 1-
N [194]

Camera 1-N [193]

Key [190]

Internal memory
[121]

External memory
interface [120]

Processor

[110]

Sensor module [180]

Pressure sensor
[180A]

Acceleration
sensor [180E]

Fingerprint sensor
[180H]

Touch sensor
[180K]

User interface
[130]

Power management
module [141]

Charging management
module [140]

FIG. 1

## Application layer

| Alarm clock | Computing engine | Map | Phone | Music |
| Smart assistant | Perception module | Video | Social | ... |

## Application framework layer

| Trip associated node | Taxi-hailing node | Activity manager | Content manager |
| Notification manager | View system | ... | |

## System library
## Android runtime

| Surface manager | Three-dimensional graphics processing library |
| Two-dimensional graphics engine | Media library | ... |

## Kernel layer

| Display driver | Camera driver | Motor driver |
| Audio driver | Sensor driver | ... |

FIG. 2

| Perception module | Computing engine | Smart assistant | Booking application |
|---|---|---|---|

S301: A computing engine subscribes to a trip information fence from a perception module

S302: The perception module sends trip information to the computing engine when acquiring the trip information, the trip information including a trip identifier, a trip date, and a trip start time

S303: Trip state

S304: Acquire a position of a first terminal, and query a first correspondence for a recommended trip service according to a state of a first user indicated by the position of the first terminal and the trip state, one or more trip services being provided

S305: Information for indicating displaying the recommended trip service

S306: Recommended trip service

FIG. 3

FIG. 4A

TO FIG. 4B

State of first user

~

FIG. 4B

EP 4 239 540 B1

08:08

December 17 Friday

YOYO suggestion

Click to acquire a boarding pass

A flight has started boarding at Gate A and
the boarding will end at time B

Reminding card

Sports and health     Intelligent life

Camera    Contact    Phone    Message

FIG. 5

YOYO suggestion

A flight has started boarding at
Gate A and the boarding will end
at time B

View a boarding pass

FIG. 6

First terminal

| Perception module | Computing engine | Smart assistant | Service platform | Taxi-hailing application |

S701: A computing engine subscribes to a trip information fence from a perception module

S702: The perception module sends trip information to the computing engine when acquiring the trip information, the trip information including a trip start time, a trip start date, and a trip start date

S703: Corresponding stay durations of a plurality of terminals at the trip start position

S704: Cluster the corresponding stay durations of the plurality of terminals at the trip start position to obtain a first duration associated with the trip start position

S705: The computing engine subscribes to a first time fence from the perception module

S706: The perception module sends the position of the first terminal to the computing engine when a first time arrives

S707: A taxi-hailing waiting duration corresponding to the position of the first terminal and a distance duration between the position of the first terminal and the trip start position

TO FIG. 7B          TO FIG. 7B          TO FIG. 7B          TO FIG. 7B          TO FIG. 7B

FIG. 7A

CONT. FROM
FIG. 7A

CONT. FROM
FIG. 7A

CONT. FROM
FIG. 7A

CONT. FROM
FIG. 7A

S708: Determine a time after the first time passes the taxi-hailing waiting duration and the distance duration as a time when the first user arrives at the trip start position, and obtain a first difference between the trip start time and the time when the first user arrives at the trip start position

S709: Whether the first difference is less than or equal to the first duration

Yes

No

S710: Determine a third time, and update the first time to the third time

S711: First link, the first link being a taxi-hailing link

S712: Draw a first interface, the first interface including a taxi-hailing waiting duration, a distance duration, and a first control, the first control corresponding to the first link

S713: Information for indicating displaying the first interface

S714: Display the first interface to provide the first user with a departure reminding service

FIG. 7B

FIG. 8

8:08 AM

December 17  Friday

YOYO suggestion Just now

Traffic is heavily congested, and it is estimated that it will take 90 minutes to arrive at an airport, so it is recommended to depart immediately

Taxi now

First control

Sports and health   Intelligent life

Camera   Contact   Phone   Message

FIG. 9

**First terminal**

| Perception module | Computing engine | Smart assistant | Service platform | Taxi-hailing application | Booking application |

S1001: A computing engine subscribes to a first time fence from a perception module

S1002: The perception module sends a position of a first terminal to the computing engine when a first time arrives

S1003: A taxi-hailing waiting duration corresponding to the position of the first terminal and a distance duration between the position of the first terminal and a trip start position

S1004: Determine a time after the first time passes the taxi-hailing waiting duration and the distance duration as a time when a first user arrives at an airport

S1005: Check-in state

S1006: Determine, according to the check-in state, whether to draw a first interface, where the first interface includes a taxi-hailing waiting duration, a distance duration, and a first control,the first control corresponds to a first link, and the first link is a taxi-hailing link acquired from the service platform

FIG. 10

First terminal

| Perception module | Computing engine | Smart assistant |

Service platform

S1101: When the check-in state is Have checked in, determine a time after the trip start time minus a first value as a gate closing time and obtain a second difference between the gate closing time and the time when the first user arrives at the airport

S1102: Acquire a first link from the service platform when the second difference is less than or equal to a second threshold, the first link being a taxi-hailing link

S1103: Draw a first interface, the first interface including a taxi-hailing waiting duration, a distance duration, and a first control, the first control corresponding to the first link

S1104: Information for indicating displaying the first interface

S1105: Display the first interface to provide the first user with a departure reminding service

FIG. 11

FIG. 12

1300

Trip prompting apparatus

Processing unit 1301

Display unit 1302

Communication unit 1303

Storage unit 1304

FIG. 13

1400

Trip prompting apparatus

Processing unit 1401

Display unit 1402

Communication unit 1403

Storage unit 1404

FIG. 14

1500

Chip

1510

Processor

1540

Bus system

1520

Memory

1530

Communication
interface

FIG. 15

**REFERENCES CITED IN THE DESCRIPTION**

**Patent documents cited in the description**

- CN 116468134 A
- CN 202210023799
- AU 2013242968 A1
- US 2017108339 A1